# EUROPEAN PATENT APPLICATION

(11) **EP 4 224 302 A1**
(43) Date of publication of application: **09.08.2023**
(21) Application number: 21892252.4
(22) Date of filing: 05.11.2021
(51) Int. Cl.: G06F 3/0488, G06F 1/16, G06F 3/0484, G06F 3/0486, G06F 3/0485

(54) **ELECTRONIC DEVICE COMPRISING FLEXIBLE DISPLAY AND METHOD FOR USING SAME**

(30) Priority: 12.11.2020 KR 20200151367; 26.11.2020 KR 20200160880
(71) Applicant: Samsung Electronics Co., Ltd., Suwon-si, Gyeonggi-do 16677 (KR)
(72) Inventor: LEE, Jaeik, Suwon-si, Gyeonggi-do 16677 (KR); PARK, Hongsik, Suwon-si, Gyeonggi-do 16677 (KR); KIM, Youngwook, Suwon-si, Gyeonggi-do 16677 (KR); KANG, Donghee, Suwon-si, Gyeonggi-do 16677 (KR); LEE, Seungjoon, Suwon-si, Gyeonggi-do 16677 (KR); LEE, Joayoung, Suwon-si, Gyeonggi-do 16677 (KR)
(74) Representative: Gulde & Partner
(86) International application number: PCT/KR2021/016018
(87) International publication number: WO 2022/103084

(57) **Abstract**

Various embodiments of the present invention relate to a device and a method for extending or reducing a display region in an electronic device comprising a flexible display. The electronic device may further comprise: a housing; a flexible display at least partially movable into or out of the inner space of the housing; and a processor operatively connected to the flexible display. The processor may display a content in a display region of the flexible display, which has a first size, may enlarge or reduce the content, displayed in the display region having the first size, on the basis of a touch input related to the content, and may deform, when the touch input related to the content satisfies a first reference, the form of the flexible display such that the size of the display region is changed from the first size to a second size. Other embodiments may also be possible.

## Description

### [Technical Field]

Various embodiments of the disclosure relate to a device and a method for expanding or reducing a display area in an electronic device including a flexible display.

### [Background Art]

Electronic devices have gradually become slim, and have been improved to increase the rigidity of the electronic devices, to enhance the design aspect thereof, and to differentiate functional elements thereof. Electronic devices have evolved from unilaterally rectangular shapes to more diversified shapes. An electronic device may have a deformable structure in which a large-screen display can be used such that the electronic device can be carried conveniently. As an example of the deformable structure, an electronic device may have a housing coupling structure configured to operate in a sliding type, and a structure (for example, rollable structure) in which the display area is expanded by a flexible display supported thereby. Such an electronic device may be required to efficiently secure a housing space through a flexible display rolling structure in a slide-in state and/or a slide-out sate.

### [Disclosure of Invention]

### [Technical Problem]

Electronic devices may include a slidable electronic device (for example, rollable electronic device) which can be deformed such that the display area thereof is expanded. For example, the slidable electronic device may include a housing (for example, first housing, base housing, or base bracket) and a sliding structure (for example, second housing, sliding bracket, or sliding bracket), which may be coupled to be able to move with regard to each other. For example, the sliding structure may slide-in or slide-out from the housing in a designated direction and by a designated reciprocating distance, thereby varying the size of the display area of the flexible display. Accordingly, electronic devices including a flexible display need a scheme for controlling the size of the display area of the display in which content is displayed.

Various embodiments of the disclosure provide a device and a method for adjusting the size of a display area in an electronic device including a flexible display.

### [Solution to Problem]

According to various embodiments, an electronic device may include a housing, a flexible display configured such that at least a part thereof can be inserted into or withdrawn from an inner space of the housing, and a processor operatively connected to the flexible display, wherein the processor is configured to display content in a display region of the flexible display, which has a first size set by at least a part of the flexible display, which is inserted into or withdrawn from an inner space of the housing, expand or reduce the content displayed in the display region having the first size, based on a touch input related to the content, and deform a form of the flexible display so that a size of the display region is changed to a second size different from the first size, in case that a touch input related to the content satisfies a first reference.

According to various embodiments, a method for operating an electronic device may include may include displaying content in a display region of a flexible display, which has a first size set by at least a part of the flexible display, which is inserted into or withdrawn from an inner space of a housing of the electronic device, expanding or reducing the content displayed in the display region having the first size, based on a touch input related to the content, and inserting or withdrawing at least a part of the flexible display into or from the inner space of the housing so that a size of the display region is changed to a second size different from the first size, in case that a touch input related to the content satisfies a first reference.

According to various embodiments, an electronic device may include a housing, a flexible display configured such that at least a part thereof can be inserted into or withdrawn from an inner space of the housing, and a processor operatively connected to the flexible display, wherein the processor is configured to display content in a display region of the flexible display, which has a first size set by at least a part of the flexible display, which is inserted into or withdrawn from an inner space of the housing, scroll the content displayed in the display region having the first size, based on a touch input related to the content, and deform a form of the flexible display so that a size of the display region is changed to a second size different from the first size, in case that a touch input related to the content satisfies a first reference.

### [Advantageous Effects of Invention]

According to various embodiments of the disclosure, the size of a display area is adjusted, based on a change in display type (for example, expansion, reduction, and/or scroll) of content displayed in the display area, in connection with an electronic device including a flexible display such that a display area having a size corresponding to the change in display type of content can be easily provided.

### [Brief Description of Drawings]

FIG. 1 is a block diagram of an electronic device in a network environment according to various embodiments.
FIG. 2A is a front perspective view of an electronic device in a closed state according to various embodiments.
FIG. 2B is a rear perspective view of an electronic device in a closed state according to various embodiments.
FIG. 3A is a front perspective view of an electronic device in an open state according to various embodiments.
FIG. 3B is a rear perspective view of an electronic device in an open state according to various embodiments.
FIG. 4 is a block diagram of an electronic device to adjust a size of a display region according to various embodiments of the disclosure.
FIG. 5 is a flowchart showing that a size of a display region is adjusted based on a size change of content in an electronic device according to various embodiments of the disclosure.
FIG. 6A shows an example for expanding a display region, based on a content expansion in an electronic device according to various embodiments of the disclosure.
FIG. 6B shows an example for expanding a display region, based on a content expansion in an electronic device according to various embodiments of the disclosure.
FIG. 6C shows an example for expanding a display region, based on a content expansion in an electronic device according to various embodiments of the disclosure.
FIG. 7A shows an example for expanding a display region in an electronic device according to various embodiments of the disclosure.
FIG. 7B shows an example for expanding a display region in an electronic device according to various embodiments of the disclosure.
FIG. 7C shows an example for expanding a display region in an electronic device according to various embodiments of the disclosure.
FIG. 8A shows an example for reducing a display region, based on a content reduction in an electronic device according to various embodiments of the disclosure.
FIG. 8B shows an example for reducing a display region, based on a content reduction in an electronic device according to various embodiments of the disclosure.
FIG. 9 is a flowchart showing that guide information related to a size adjustment of a display region is output in an electronic device according to various embodiments of the disclosure.
FIG. 10A shows an example of guide information related to a size adjustment of a display region in an electronic device according to various embodiments of the disclosure.
FIG. 10B shows an example of guide information related to a size adjustment of a display region in an electronic device according to various embodiments of the disclosure.
FIG. 10C shows an example of guide information related to a size adjustment of a display region in an electronic device according to various embodiments of the disclosure.
FIG. 10D shows an example of guide information related to a size adjustment of a display region in an electronic device according to various embodiments of the disclosure.
FIG. 10E shows an example of guide information related to a size adjustment of a display region in an electronic device according to various embodiments of the disclosure.
FIG. 11 is a flowchart sowing that a content position is changed in an electronic device according to various embodiments of the disclosure.
FIG. 12A shows an example for changing a content position in an electronic device according to various embodiments of the disclosure.
FIG. 12B shows an example for changing a content position in an electronic device according to various embodiments of the disclosure.
FIG. 12C shows an example for changing a content position in an electronic device according to various embodiments of the disclosure.
FIG. 13 is a flowchart showing that a size of a display region is adjusted based on scroll of content in an electronic device according to various embodiments of the disclosure.
FIG. 14A shows an example for expanding a display region, based on scroll of content in an electronic device according to various embodiments of the disclosure.
FIG. 14B shows an example for expanding a display region, based on scroll of content in an electronic device according to various embodiments of the disclosure.
FIG. 14C shows an example for expanding a display region, based on scroll of content in an electronic device according to various embodiments of the disclosure.
FIG. 15A shows another example for expanding a display region in an electronic device according to various embodiments of the disclosure.
FIG. 15B shows another example for expanding a display region in an electronic device according to various embodiments of the disclosure.
FIG. 16 is a flowchart showing that guide information is output based on scroll of content in an electronic device according to various embodiments of the disclosure.
FIG. 17A shows another example of guide information related to a size adjustment of a display region in an electronic device according to various embodiments of the disclosure.
FIG. 17B shows another example of guide information related to a size adjustment of a display region in an electronic device according to various embodiments of the disclosure.
FIG. 18 is a flowchart showing that a size of a display region is adjusted based on an input point in an electronic device according to various embodiments of the disclosure.
FIG. 19A shows an example for expanding a size of a display region, based on an input point in an electronic device according to various embodiments of the disclosure.
FIG. 19B shows an example for expanding a size of a display region, based on an input point in an electronic device according to various embodiments of the disclosure.
FIG. 19C shows an example for expanding a size of a display region, based on an input point in an electronic device according to various embodiments of the disclosure.

### [Mode for the Invention]

Hereinafter, various embodiments will be described in detail with reference to the accompanying drawings.

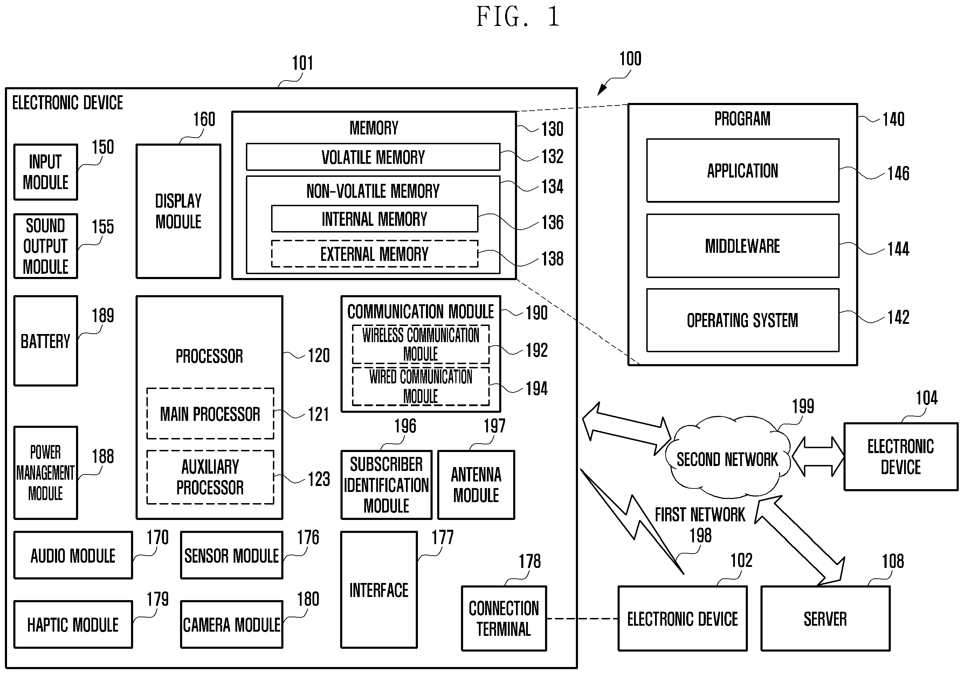

FIG. 1 is a block diagram illustrating an electronic device in a network environment according to an embodiment of the disclosure. Referring to FIG. 1, an electronic device 101 in a network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the external electronic device 102). According to an embodiment, the connection terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. The subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an high frequency band (e.g., mmWave) antenna module. According to an embodiment, the high frequency band (e.g., mmWave) antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102 and 104 or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

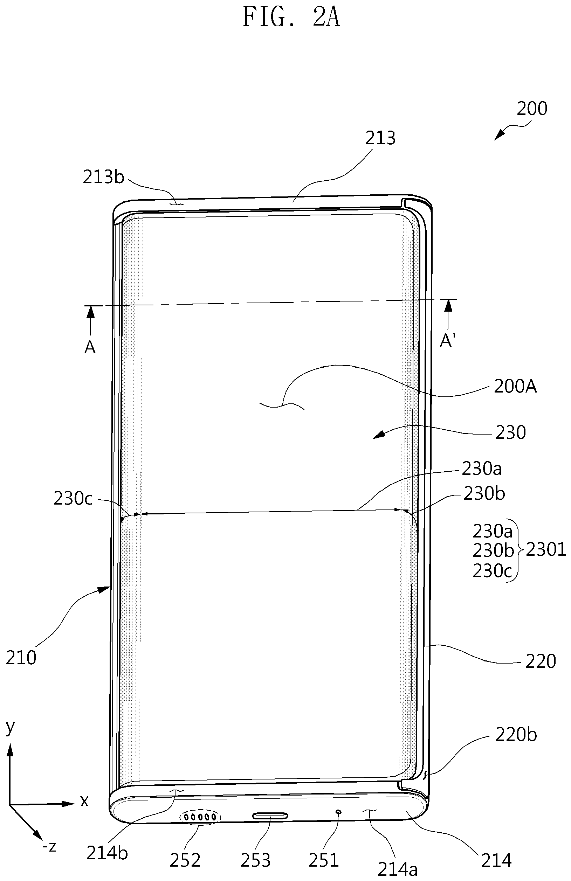

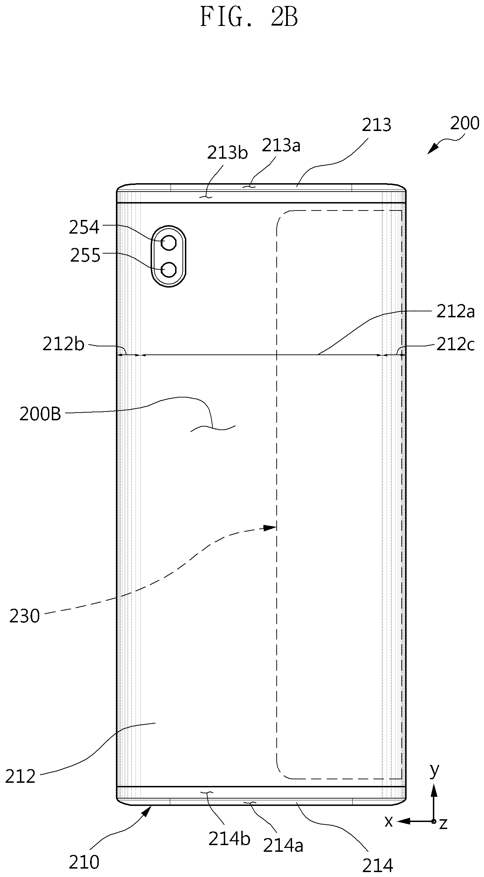

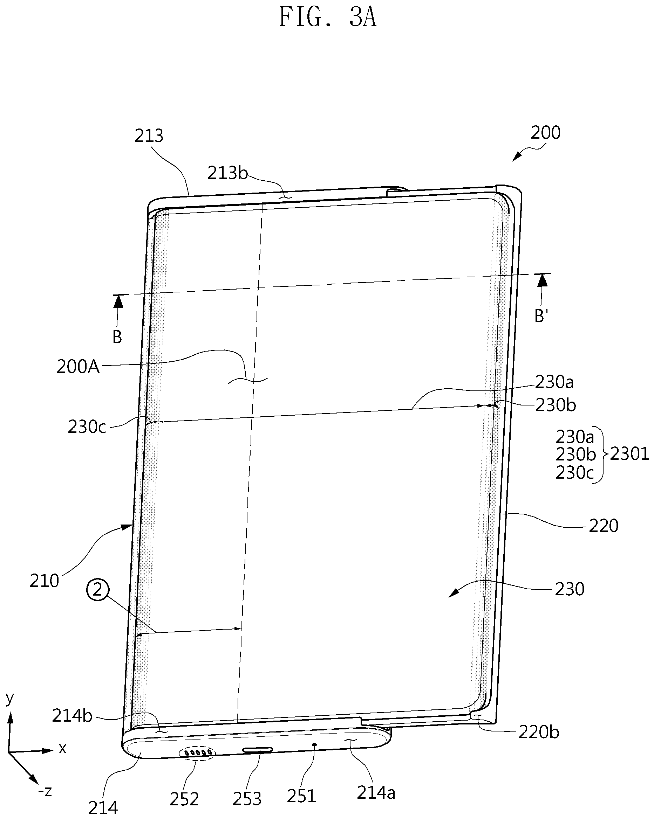

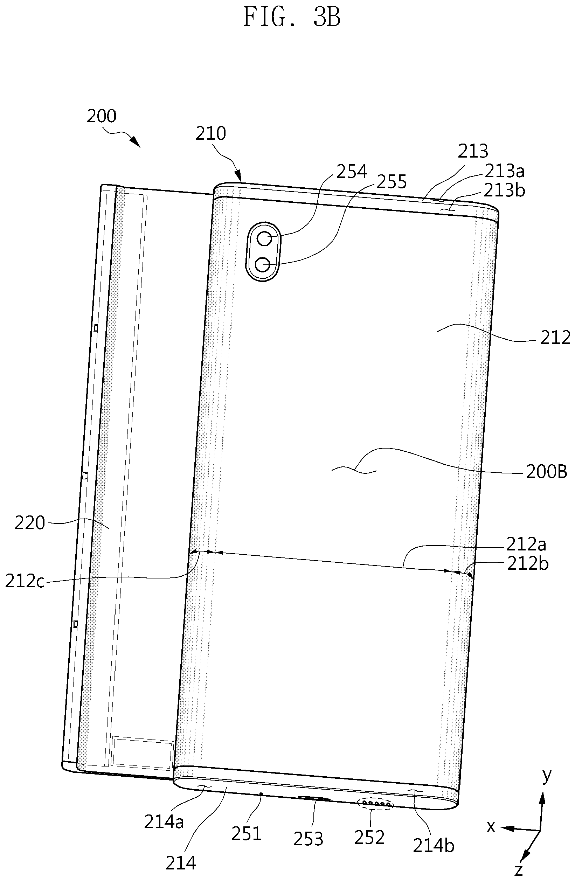

FIG. 2A is a front perspective view of an electronic device 200 in a closed state according to various embodiments. FIG. 2B is a rear perspective view of an electronic device 200 in a closed state according to various embodiments. FIG. 3A is a front perspective view of an electronic device 200 in an open state according to various embodiments. FIG. 3B is a rear perspective view of an electronic device 200 in an open state according to various embodiments. According to an embodiment, an electronic device 200 in FIG. 2A may include the electronic device 101 in FIG. 1. According to an embodiment, FIGS. 2A and 2B illustrate the electronic device 200 in a state in which a screen 2301 is not expanded. According to an embodiment, FIGS. 3A and 3B illustrate the electronic device 200 in a state in which a screen 2301 is expanded.

Referring to FIGS. 2A, 2B, 3A, and 3B, according to various embodiments, the electronic device 200 may be implemented to be able to expand the screen 2301 in a sliding manner. According to an embodiment, the screen 2301 may include a region of a flexible display 230, which is being displayed to the outside. According to an embodiment, the state, in which the screen 2301 is not expanded, may be a state in which a sliding plate 220 for a sliding movement of the flexible display 230 does not slide out, and hereinafter, may be referred to as "a closed state". According to an embodiment, the state, in which the screen 2301 is expanded, may be a state (e.g., a state of being maximally expanded) in which the screen 2301 is expanded by a slide-out of the sliding plate 220, and hereinafter, may be referred to as "an open state". For example, the slide-out may include a series of operations in which the sliding plate 220 is at least partially moved in a first direction (e.g., the +x-axis direction) in case that the electronic device 200 is switched from a closed state to an open state. For example, an open state may be defined as a state in which the screen 2301 is expanded compared to a closed state, and according to a movement position of the sliding plate 220, screens having various sizes may be provided. For example, an intermediate state may include a state between the closed state of FIG. 2A and the open state of FIG. 3A. According to an embodiment, the screen 2301 may include an active region (e.g., a display region) of the flexible display 230, which is visually exposed to enable an image output. For example, the active region (or a size of the active region) of the flexible display 230 may be adjusted based on a movement of the sliding plate 220 or a movement of the flexible display 230. According to various embodiments, the flexible display 230, which is disposed in the electronic device 200 in FIG. 2A to enable a sliding movement so as to provide the screen 2301, may also be referred to as "a slide-out display" or "an expandable display".

According to various embodiments, the electronic device 200 may include a sliding structure related to the flexible display 230. According to an embodiment, in case that the flexible display 230 is moved by a predetermined distance by an external force, due to an elastic structure included in the sliding structure, the electronic device 200 may be switched from a closed state to an open state or from an open state to a closed state without additional external force (e.g., a semi-automatic slide operation).

According to various embodiments, based on a signal received through an input device included in the electronic device 200, by a drive device, such as a motor, connected to the flexible display 230, the electronic device 200 may be switched from a closed state to an open state or from an open state to a closed state. According to an embodiment, in case that an input signal by a hardware button or a software button provided through a screen is detected, the electronic device 200 may be switched from a closed state to an open state or from an open state to a closed state.

According to various embodiments, the electronic device 200 may be switched from a closed state to an open state or from an open state to a closed state, based on a signal detected through various sensors such as pressure sensors. According to an embodiment, in case that a user grips the electronic device 200 by using the hand thereof, the electronic device 200, through at least one sensor, may detect a squeeze gesture generated when a part (e.g., the palm or the finger) of the hand presses a designated section of the electronic device 200. The electronic device 200 may be switched from a closed state to an open state or from an open state to a closed state, based on the squeeze gesture obtained through the at least one sensor.

According to various embodiments, the flexible display 230 may include a second section (2) (see FIG. 3A). According to an embodiment, the second section ② may include a portion of the screen 2301, which is expanded when the electronic device 200 is switched from a closed state to an open state. For example, the second section (2) may be withdrawn from an inner space of the electronic device 200 in a sliding manner in case that the electronic device 200 is switched from a closed state to an open state. Accordingly, the screen 2301 may be expanded. According to an embodiment, at least a part of the second section (2) may be inserted into the inner space of the electronic device 200 in a sliding manner in case that the electronic device 200 is switched from an open state to a closed state. Accordingly, the screen 2301 may be reduced.

According to an embodiment, the second section (2) may be inserted into the inner space of the electronic device 200 while at least a part thereof is bent in case that the electronic device 200 is switched from an open state to a closed state. For example, the flexible display 230 may include a flexible substrate (e.g., a plastic substrate) formed of a polymer material including polyimide (PI) or polyester (PET). For example, the second section (2) may be a portion which is bent in the flexible display 230 in case that the electronic device 200 is switched between an open state and a closed state, and may also be referred to as a bendable section.

According to various embodiments, the electronic device 200 may include a housing 210, the sliding plate 220, or the flexible display 230.

According to an embodiment, the housing (or a case) 210 may include a rear cover (a back cover) 212, a first side cover (a side cover) 213, or a second side cover 214. The rear cover 212, the first side cover 213, or the second side cover 214 may be connected to a support member (not shown) positioned inside the electronic device 200, and may form at least a part of the exterior of the electronic device 200.

According to an embodiment, the rear cover 212 may form at least a part of a rear surface 200B of the electronic device 200. For example, the rear cover 212 may be substantially opaque. For example, the rear cover 212 may be formed of coated or colored glass, ceramic, polymer, metal (e.g., aluminum, stainless steel (STS), or magnesium), or by a combination of at least two of the above materials. According to an embodiment, in a state (e.g., a closed state) where the second section (2) of the flexible display 230 is inserted in the inner space of the housing 210, at least a part of the second section ② may also be disposed to be visible from the outside through the rear cover 212. In this case, the rear cover 212 may be formed of a transparent material and/or a translucent material.

According to an embodiment, the rear cover 212 may include a flat-surface part 212a and curved-surface parts 212b and 212c positioned at sides opposite to each other while having the flat-surface part 212a interposed therebetween. For example, the curved-surface parts 212b and 212c may be formed adjacent to relatively long opposite edges (not shown) of the rear cover 212, respectively, and may be bent toward a screen positioned at the side opposite to the rear cover 212 and then extend seamlessly. According to an embodiment, the rear cover 212 may include one of the curved-surface parts 212b and 212c or may also be implemented without the curved-surface parts 212b and 212c.

According to an embodiment, the first side cover 213 and the second side cover 214 may be positioned at sides opposite to each other. For example, the first side cover 213 and the second side cover 214 may be positioned at sides opposite to each other while having the flexible display 230 interposed therebetween, in a second direction (e.g., the y-axis direction) orthogonal to the first direction (e.g., the +x-axis direction) in which the sliding plate 220 slides out. As an example, the first side cover 213 may form at least a part of a first side surface 213a of the electronic device 200. As an example, the second side cover 214 may form at least a part of a second side surface 214a of the electronic device 200, which is oriented in the direction opposite to the first side surface 213a. For example, the first side cover 213 may include a first edge part (or a first rim) 213b extending from the edge of the first side surface 213a. As an example, the first edge part 213b may form at least a part of a bezel of one side of the electronic device 200. For example, the second side cover 214 may include a second edge part (or a second rim) 214b extending from the edge of the second side surface 214a. As an example, the second edge part 214b may form at least a part of a bezel of the other side of the electronic device 200.

According to various embodiments, the surface of the first edge part 213b, the surface of the second edge part 214b, and the surface of the sliding plate 220 may be seamlessly connected in the closed state of FIG. 2A, and thus may form a curved-surface part (not shown) of one side corresponding to the side of the first curved-surface part 230b of the screen 2301. According to an embodiment, the surface of the first edge part 213b or the surface of the second edge part 214b may include a curved-surface part (not shown) of the other side corresponding to the side of the second curved-surface part 230c of the screen 2301, which is positioned at the side opposite to the first curved-surface part 230b.

According to various embodiments, the sliding plate 220 may perform a sliding movement on a support member (not shown) positioned inside the electronic device 200. According to an embodiment, at least a part of the flexible display 230 may be disposed on the sliding plate 220. For example, the closed state of FIG. 2A or the open state of FIG. 3A may be formed based on a position of the sliding plate 220 on a support member positioned inside the electronic device 200. According to an embodiment, the flexible display 230 may be attached to the sliding plate 220 by an adhesive member (or a bonding member) (not shown). For example, the adhesive member may include a heat-reactive adhesive member, a photoreactive adhesive member, a general adhesive, and/or a double-sided tape. According to an embodiment, the flexible display 230 may be inserted into a recess formed on the sliding plate 220 in a sliding manner, and may be disposed on and fixed to the sliding plate 220. As an example, the sliding plate 220 may function to support at least a part of the flexible display 230. As an example, the sliding plate 220 may also be referred to as a display support structure.

According to various embodiments, the sliding plate 220 may include a third edge part 220b forming an outer surface (e.g., a surface exposed to the outside so as to form the exterior of the electronic device 200) of the electronic device 200. According to an embodiment, the third edge part 220b may form a bezel around the screen 2301 together with the first edge part 213b and the second edge part 214b in the closed state of FIG. 2A. According to an embodiment, in the closed state of FIG. 2A, the third edge part 220b may extend in the second direction (e.g., the y-axis direction) so as to connect one end of the first side cover 213 and one end of the second side cover 214. For example, in the closed state of FIG. 2A, the surface of the third edge part 220b may be seamlessly connected to the surface of the first edge part 213b and/or the surface of the second edge part 214b.

According to various embodiments, by the slide-out of the sliding plate 220, at least a part of the second section ② may provide a state (e.g., an open state) in which the screen 2301 is expanded as FIG. 3A while being withdrawn from the inside of the electronic device 200.

According to various embodiments, in the closed state of FIG. 2A, the screen 2301 may include a flat-surface part 230a, and a first curved-surface part 230b and/or a second curved-surface part 230c positioned at sides opposite to each other while having the flat-surface part 230a interposed therebetween. According to an embodiment, the first curved-surface part 230b and the second curved-surface part 230c may be substantially symmetrical while having the flat-surface part 230a interposed therebetween. For example, in the closed state in FIG. 2A, the first curved-surface part 230b and/or the second curved-surface part 230c may be positioned to correspond to the curved-surface parts 212b and 212c of the rear cover 212, respectively, and may have a shape bent toward the rear cover 212. For example, the flat-surface part 230a may be expanded in case of being switched from the closed state of FIG. 2A to the open state of FIG. 3A. For example, in the closed state of FIG. 2A, a partial region of the second section (2), which forms the second curved-surface part 230c, may be included in the flat-surface part 230a expanded when being switched from the closed state of FIG. 2A to the open state of FIG. 3A, and may be formed by another region of the second section (2).

According to various embodiments, the electronic device 200 may include an opening (not shown) which allows the second section (2) to be inserted or withdrawn therethrough, and/or a pulley (not shown) positioned in the opening. According to an embodiment, the pulley may be positioned to correspond to the second section (2), and in the switching between the closed state of FIG. 2A and the open state of FIG. 3A, a movement and a movement direction of the second section (2) may be guided through a rotation of the pulley. According to an embodiment, the first curved-surface part 230b may be formed to correspond to a curved-surface formed on one surface of the sliding plate 220. According to an embodiment, the second curved-surface part 230c may be formed by a portion of the second section ②, which corresponds to a curved-surface of the pulley. For example, in a closed state or an open state of the electronic device 200, the first curved-surface part 230c may be positioned at the side opposite to the second curved-surface part 230b, and thus may improve aesthetic impression of the screen 2301. According to an embodiment, the electronic device 200 may also be implemented in a form in which the flat-surface part 230a is expanded without the first curved-surface part 230b.

According to various embodiments, the flexible display 230 may further include a touch detection circuit (e.g., a touch sensor). According to an embodiment (not shown), the flexible display 230 may be coupled or be adjacently disposed to a pressure sensor capable of measuring the intensity (pressure) of touch, and/or a digitizer for detecting a magnetic field type pen input device (e.g., a stylus pen). For example, the digitizer may include a coil member disposed on a dielectric substrate so as to detect the resonance frequency of an electromagnetic induction method, which is applied from the pen input device.

According to various embodiments, the electronic device 200 may include a microphone hole 251 (e.g., the input module 150 in FIG. 1), a speaker hole 252 (e.g., the sound output module 155 in FIG. 1), a connector hole 253 (e.g., the connection terminal 178 in FIG. 1), a camera module 254 (e.g., the camera module 180 in FIG. 1), or a flash 255. According to an embodiment, the flash 255 may also be implemented by being included in the camera module 254. In some embodiments, at least one of elements of the electronic device 200 may be omitted, or the electronic device 200 may additionally include other elements.

According to an embodiment, the microphone hole 251 may be formed through at least a part of the second side surface 214a to correspond to a microphone (not shown) positioned inside the electronic device 200. For example, the position of the microphone hole 251 is not limited to the embodiment of FIG. 2A, and may be various. According to an embodiment, the electronic device 200 may include multiple microphones capable of detecting the direction of sound.

According to an embodiment, the speaker hole 252 may be formed through at least a part of the second side surface 214a to correspond to a speaker positioned inside the electronic device 200. For example, the position of the speaker hole 252 is not limited to the embodiment of FIG. 2A, and may be various. According to an embodiment, the electronic device 200 may include a receiver hole for phone calling. In an embodiment, the microphone hole 251 and the speaker hole 252 may be implemented as a single hole, or the speaker hole 252 may be omitted as a piezo speaker.

According to an embodiment, the connector hole 253 may be formed through at least a part of the second side surface 214a to correspond to a connector (e.g., a USB connector) positioned inside the electronic device 200. For example, the electronic device 200 may transmit and/or receive power and/or data to and/or from an external electronic device electrically connected to the connector through the connector hole 253. As an example, the position of the connector hole 253 is not limited to the embodiment of FIG. 2A, and may be various.

According to an embodiment, the camera module 254 and the flash 255 may be positioned on the rear surface 200B of the electronic device 200. For example, the camera module 154 may include one lens or multiple lenses, an image sensor, and/or an image signal processor. For example, the flash 255 may include a light-emitting diode or a xenon lamp. According to an embodiment, two or more lenses (an infrared camera, a wide-angle lens, and a telephoto lens) and image sensors may be arranged on one surface of the electronic device 200. According to an embodiment, the electronic device 200 may include multiple camera modules without being limited to the embodiment of FIG. 2B or FIG. 3B. For example, the camera module 254 may be one of the multiple camera modules. For example, the electronic device 200 may include multiple camera modules (e.g., a dual camera or a triple camera) having different properties (e.g., view angles) or functions, respectively. For example, the electronic device 200 may include multiple camera modules (e.g., the camera module 254) including lenses having different angles of view. In this case, the electronic device 200 may control to change a view angle of the camera module, which is performed in the electronic device 200, based on a user selection. In addition, the multiple camera modules may include at least one of a wide-angle camera, a telephoto camera, a color camera, a monochrome camera, or an infrared (IR) camera (e.g., a time of flight (TOF) camera or a structured light camera). According to an embodiment, the IR camera may operate as at least a part of a sensor module (not shown).

According to various embodiments (not shown), the electronic device 200 may include a camera module (e.g., a front camera) which receives light through one surface (e.g., the front surface 200A) of the electronic device 200, which is placed in a direction in which the screen 2301 is oriented, and generates an image signal, based on the received light. According to an embodiment, the camera module 254 is not limited to the embodiment of FIG. 2B or FIG. 3B, and may be positioned inside the housing 210 while being aligned with an opening (e.g., a through-hole or a notch) formed through the flexible display 230. For example, the camera module 254 may generate an image signal by receiving light through an opening formed through the flexible display 230, and a partial region of a transparent cover, which overlaps the opening formed through the flexible display 230. For example, the transparent cover may function to protect the flexible display 230 from the outside, and may include a material such as polyimide or ultrathin glass (UTG).

According to an embodiment, the camera module 254 may be disposed at the lower end of at least a part of the screen 2301 of the flexible display 230, and may perform related functions (e.g., image photographing) while the position of the camera module 254 is not visually distinguished (exposed). In this case, for example, when seen from above the screen 2301 (e.g., when seen in the -z-axis direction), the camera module 254 may be disposed to overlap at least a part of the screen 2301, and thus may obtain an image of an external subject without being exposed to the outside.

According to various embodiments (not shown), the electronic device 200 may further include a key input device (e.g., the input module 150 in FIG. 1). According to an embodiment, the key input device may be positioned on the first side surface 213a of the electronic device 200, which is formed by the first side cover 213. According to an embodiment (not shown), the input device may include at least one sensor module.

According to various embodiments (not shown), the electronic device 200 may include various sensor modules (e.g., the sensor module 176 in FIG. 1). According to an embodiment, the sensor module may generate electric signals or data values corresponding to an internal operation state of the electronic device 200 or an external environment state. For example (not shown), the sensor module may include a proximity sensor which generates a signal associated with the proximity of an external object, based on light received through the front surface 200A of the electronic device 200, which is placed in a direction in which the screen 2301 is oriented. For another example (not shown), the sensor module may include various biometric sensors, such as a fingerprint sensor or an HRM sensor, for detecting information on a living body, based on light received through the front surface 200A or the rear surface 200B of the electronic device 200. For example, the electronic device 200 may include at least one of various other sensor modules such as a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

According to various embodiments, the electronic device 200 may also be implemented as a structure in which a screen is expanded from the side of the third edge part 220b in case that the sliding plate 220 slides out, without being limited to the embodiment of FIG. 2A, FIG. 2B, FIG. 3A, and FIG. 3B. For example, in the closed state in FIG. 2A, a partial region of the flexible display 230, which forms the first curved-surface part 230b, may be included in the flat-surface part 230a expanded when being switched from the closed state in FIG. 2A to the open state in FIG. 3A, and may be formed by another region of the flexible display 230.

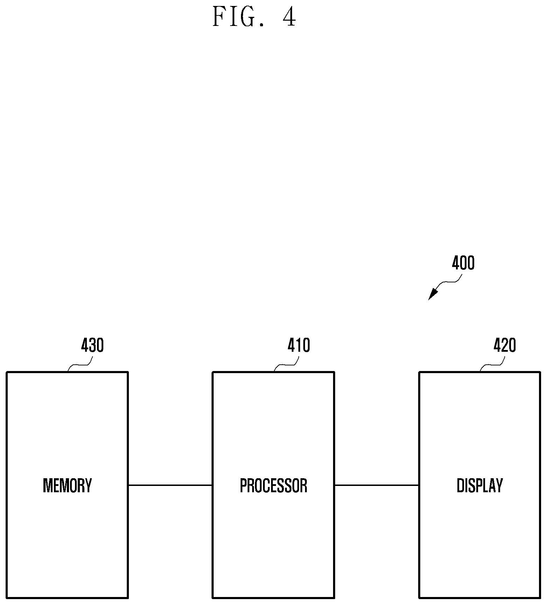

FIG. 4 is a block diagram of an electronic device to adjust a size of a display region according to various embodiments of the disclosure. According to an embodiment, an electronic device 400 in FIG. 4 may be at least partially similar to the electronic device 101 in FIG. 1 or the electronic device 200 in FIG. 2A, or may further include other embodiments of an electronic device.

Referring to FIG. 4, according to various embodiments, the electronic device 400 may include a processor 410, a display 420, and/or a memory 430. According to an embodiment, the processor 410 may be substantially the same as the processor 120 in FIG. 1 or may include the processor 120. The display 420 may be substantially the same as the display module 160 in FIG. 1 or may include the display module 160. The memory 430 may be substantially the same as the memory 130 in FIG. 1 or may include the memory 130.

According to various embodiments, the display 420 may display information processed by the electronic device 400. According to an embodiment, the display 420 may display at least a part of content temporarily or non-temporarily stored in the memory 430, based on control of the processor 410.

According to various embodiments, the display 420 may include a touch sensor configured to detect a touch or a pressure sensor configured to measure the intensity of a force generated by a touch. According to an embodiment, the display 420 may detect a touch input generated in case that an external object approaches or comes into contact with the surface of the display 420.

According to various embodiments, the display 420 may include a sliding plate (e.g., the sliding plate 220 in FIG. 2A) capable of sliding out or sliding in from a housing (e.g., the housing 210 in FIG. 2A), and/or a bendable section (e.g., the second section (2) in FIG. 3A) which can be withdrawn from or inserted into the inner space (e.g., the inner space of the housing 210 in FIG. 2A) of a housing coupled to overlap the sliding plate. According to an embodiment, a display region of the display 420 may be expand as a sliding plate (e.g., the sliding plate 220 in FIG. 2A) slides out from a housing (e.g., the housing 210 in FIG. 2A). For example, the display region of the display 420, based on control of the processor 420, may be expanded as a sliding plate (e.g., the sliding plate 220 in FIG. 2A) is withdrawn from a housing (e.g., the housing 210 in FIG. 2A). According to an embodiment, the display region of the display 420 may be reduced as a sliding plate (e.g., the sliding plate 220 in FIG. 2A) slides in a housing (e.g., the housing 210 in FIG. 2A). For example, the display region of the display 420, based on control of the processor 420, may be reduced as a sliding plate (e.g., the sliding plate 220 in FIG. 2A) is inserted into a housing (e.g., the housing 210 in FIG. 2A). As an example, the display region may be a region (e.g., an active region of the flexible display 230) of the display 420, which is exposed to the outside so that information (e.g., content) is displayed, and may include the entire or at least a part of the display 420.

According to various embodiments, the processor 410 may control the memory 430 and/or the display 420 operatively connected.

According to various embodiments, the processor 410 may control the display 420 so that content is displayed. According to an embodiment, the processor 410 may control the display 420 so that content selected by a user input or an application program executed in the processor 410 is displayed.

According to various embodiments, the processor 410 may control the display 420 so that a display form of content is changed, based on an input related to content displayed in a display region of display 420. According to an embodiment, the processor 410 may adjust a size of content displayed in the display region of the display 420, based on an input related to the content displayed in the display region of the display 420. For example, a size adjustment of content may include an operation of expanding or reducing content displayed in the display region of the display 420, based on an input related to the content. For example, an input related to content may include a touch input detected through the display 420. According to an embodiment, the processor 410 may scroll content displayed in the display region of the display 420, based on an input related to the content displayed in the display region of the display 420.

According to various embodiments, the processor 410 may adjust a size (or a size of a display region) of the display 420, based on an input related to a display form of content displayed in a display region of the display 420 or a change of a display form of content.

According to an embodiment, the processor 410 may adjust a size (or a size of a display region) of the display 420, based on an input related to a size adjustment of content displayed in a display region of the display 420. For example, in case that a length (e.g., a movement distance of a touch input) of an input related to expansion of content displayed in the display region of the display 420 exceeds a designated first reference length, the processor 410 may control the display 420 so that a size of the display region of the display 420 is expanded. For example, in case that a length (e.g., a movement distance of a touch input) of an input related to reduction of content displayed in the display region of the display 420 exceeds a designated second reference length, the processor 410 may control the display 420 so that a size of the display region of the display 420 is reduced. As an example, the first reference length and the second reference length may be different or the same.

According to an embodiment, the processor 410 may adjust a size (or a size of a display region) of the display 420, based on a size change amount (or a size change ratio) of content displayed in a display region of the display 420. For example, in case that an expansion ratio of content displayed in the display region of the display 420 exceeds a designated first reference ratio, the processor 410 may control the display 420 so that a size of the display region of the display 420 is expanded. For example, in case that a reduction ratio of content displayed in the display region of the display 420 exceeds a designated second reference ratio, the processor 410 may control the display 420 so that a size of the display region of the display 420 is reduced. As an example, the first reference ratio and the second reference ratio may be different or the same.

According to an embodiment, the processor 410 may adjust a size (or a size of a display region) of the display 420, based on an input related to scroll of content displayed in a display region of the display 420. For example, in case that a length of an input related to scroll of content displayed in a display region of the display 420 exceeds a designated third reference length, the processor 410 may control the display 420 so that a size of the display region of the display 420 is expanded. For example, in case that the number of times of an input, which is continuously detected for scroll of content displayed in the display region of the display 420, exceeds the number of times of a designated first reference, the processor 410 may control the display 420 so that a size of the display region of the display 420 is expanded.

According to an embodiment, the processor 410 may adjust a size (or a size of a display region) of the display 420, based on a scroll length of content displayed in a display region of the display 420. For example, in case that a scroll length of content displayed in the display region of the display 420 exceeds a designated fourth reference length, the processor 410 may control the display 420 so that a size of the display region of the display 420 is expanded.

According to various embodiments, the processor 410 may control the display 420 so that guide information related to a size adjustment (or a size adjustment of a display region) of the display 420 is displayed. According to an embodiment, the processor 410 may control the display 420 so that guide information is displayed based on an input related to a size adjustment of content displayed in a display region of the display 420. For example, in case that a length of an input related to expansion of content displayed in a display region of the display 420 exceeds a designated fifth reference length, the processor 410 may control the display 420 so that guide information related to a size adjustment (or a size adjustment of a display region) of the display 420 is displayed. As an example, in case that a length of an input related to expansion of content displayed in a display region of the display 420 satisfies a designated condition (e.g., the designated first reference length) related to guide information, the processor 410 may control the display 420 so that a size of the display 420 is expanded. For example, in case that a length of an input related to reduction of content displayed in a display region of the display 420 exceeds a designated sixth reference length, the processor 410 may control the display 420 so that guide information related to a size adjustment (or a size adjustment of a display region) of the display 420 is displayed. As an example, in case that a length of an input related to reduction of content displayed in a display region of the display 420 satisfies a designated condition (e.g., the designated second reference length) related to guide information, the processor 410 may control the display 420 so that a size of the display 420 is reduced.

According to an embodiment, the processor 410 may control the display 420 so that guide information is displayed based on a size change amount (or a size change ratio) of content displayed in a display region of the display 420. For example, in case that an expansion ratio of content displayed in the display region of the display 420 exceeds the designated third reference ratio, the processor 410 may control the display 420 so that guide information related to a size adjustment (or a size adjustment of a display region) of the display 420 is displayed. As an example, in case that an expansion ratio of content displayed in the display region of the display 420 satisfies a designated condition (e.g., the designated first reference ratio) related to guide information, the processor 410 may control the display 420 so that a size of the display region of the display 420 is expanded. For example, in case that a reduction ratio of content displayed in the display region of the display 420 exceeds the designated fourth reference ratio, the processor 410 may control the display 420 so that guide information related to a size adjustment (or a size adjustment of a display region) of the display 420 is displayed. As an example, in case that a reduction ratio of content displayed in the display region of the display 420 satisfies a designated condition (e.g., the designated second reference ratio) related to guide information, the processor 410 may control the display 420 so that a size of the display region of the display 420 is reduced.

According to an embodiment, the processor 410 may control the display 420 so that guide information is displayed based on an input related to scroll of content displayed in a display region of the display 420. For example, in case that a length of an input related to scroll of content displayed in the display region of the display 420 exceeds a designated seventh reference length, the processor 410 may control the display 420 so that guide information related to a size adjustment (or a size adjustment of a display region) of the display 420 is displayed. As an example, in case that a length of an input related to scroll of content displayed in the display region of the display 420 satisfies a designated condition (e.g., the designated third reference length) related to guide information, the processor 410 may control the display 420 so that a size of the display region of the display 420 is expanded. For example, in case that the number of times of an input, which is continuously detected for scroll of content displayed in the display region of the display 420, exceeds the number of times of a designated second reference, the processor 410 may control the display 420 so that guide information related to size adjustment (or a size adjustment of a display region) of the display 420 is displayed. As an example, in case that the number of times of an input related to scroll of content displayed in the display region of the display 420 satisfies a designated condition (e.g., the number of times of the designated first reference) related to guide information, the processor 410 may control the display 420 so that a size of the display region of the display 420 is expanded.

According to an embodiment, the processor 410 may control the display 420 so that guide information is displayed based on a scroll length of content displayed in a display region of the display 420. For example, in case that a scroll length of content displayed in the display region of the display 420 exceeds a designated eighth reference length, the processor 410 may control the display 420 so that guide information related to a size adjustment (or a size adjustment of a display region) of the display 420 is displayed. As an example, in case that a scroll length of content displayed in the display region of the display 420 satisfies a designated condition (e.g., the designated fourth reference length) related to guide information, the processor 410 may control the display 420 so that a size of the display region of the display 420 is expanded.

According to various embodiments, the processor 410 may adjust a size (or a size of a display region) of the display 420, based on a position of an input related to content displayed in a display region of the display 420. According to an embodiment, in case that a position of an input related to content displayed in the display region of the splay 420 is included in a first reference region, the processor 410 may control the display 420 so as that guide information related to a size adjustment (or a size adjustment of a display region) of the display 420 is displayed. As an example, the first reference region may be a predefined region to determine whether guide information is output, and may include at least a part of the display region, from the edge of the display region. For example, in case that a position of an input related to content displayed in the display region of the display 420 satisfies a designated condition related to guide information, the processor 410 may control the display 420 so that a size of the display region of the display 420 is expanded. As an example, the state, in which a position of an input related to content satisfies a designated condition related to guide information, may include a state in which a position of an input related to content is included in a second reference region. As an example, the second reference region may be set based on a position at which guide information is output.

According to various embodiments, the memory 430 may store various data used by at least one element (e.g., the processor 410 and/or the display 420) of the electronic device 400. For example, the data may include at least one of reference information for determining whether to output guide information related to a size adjustment (or a size adjustment of a display region) of the display 420 or reference information for determining whether to perform a size adjustment (or a size adjustment of a display region) of the display 420.

According to various embodiments, the processor 410 may adjust a size (or a size of the display region) of the display 420, based on whether a size of a display region is changed.

According to an embodiment, in case that content displayed in a display region of the display 420 is expanded based on an input related to the content, the processor 410 may identify whether a size of the display region can be expanded. For example, in case that content displayed in the display region of the display 420 is expanded in a state where at least a part of the display 420 is inserted in (e.g., slides in) a housing (e.g., the housing 210 in FIG. 2A), the processor 410 may determine that a size of the display region can be expanded. For another example, in case that content displayed in the display region of the display 420 is expanded in a state where at least a part of the display 420 is withdrawn (e.g., slides out) from a housing (e.g., the housing 210 in FIG. 2A), the processor 410 may determine that a size of the display region cannot be expanded.

According to an embodiment, in case that content displayed in a display region of the display 420 is reduced based on an input related to the content, the processor 410 may identify whether a size of the display region can be reduced. For example, in case that content displayed in the display region of the display 420 is reduced in a state where at least a part of the display 420 is inserted in (e.g., slides in) a housing (e.g., the housing 210 in FIG. 2A), the processor 410 may determine that a size of the display region cannot be reduced. For another example, in case that content displayed in the display region of the display 420 is reduced in a state where at least a part of the display 420 is withdrawn (e.g., slides out) from a housing (e.g., the housing 210 in FIG. 2A), the processor 410 may determine that a size of the display region can be reduced.

According to an embodiment, in case that it is determined that a size of a display region can be changed (e.g., expanded or reduced) based on a change (e.g., expansion or reduction) in a display form of content displayed in a display region of the display 420, the processor 410 may change a size of the display region, based on the change in the display form of the content. According to an embodiment, in case that it is determined that a size of a display region cannot be changed (e.g., expanded or reduced) based on a change (e.g., expansion or reduction) in a display form of content displayed in the display region of the display 420, the processor 410 may change the display form of the content displayed in the display region.

According to various embodiments of the disclosure, an electronic device (e.g., the electronic device 101 in FIG. 1, the electronic device 200 in FIG. 2A or FIG. 3A, or the electronic device 400 in FIG. 4) may include a housing (e.g., the housing 210 in FIG. 2A), a flexible display (e.g., the display module 160 in FIG. 1, the flexible display 230 in FIG. 2A, or the display 420 in FIG. 4) configured such that at least a part thereof can be inserted into or withdrawn from an inner space of the housing, and a processor (e.g., the processor 120 in FIG. 1 or the processor 410 in FIG. 4) operatively connected to the flexible display, wherein the processor may be configured to display content in a display region of the flexible display, which has a first size set by at least a part of the flexible display, which is inserted into or withdrawn from an inner space of the housing, expand or reduce the content displayed in the display region having the first size, based on a touch input related to the content, and insert or withdraw at least a part of the flexible display into or from the inner space of the housing so that a size of the display region is changed to a second size different from the first size, in case that a touch input related to the content satisfies a first reference.

According to various embodiments, wherein the processor may be configured to expand or reduce the content displayed in the display region having the first size at an expansion ratio or a reduction ratio corresponding to a movement distance of a touch input related to the content.

According to various embodiments, the processor is configured to display guide information related to a size change of the display region in at least a part of the display region having the first size, in case that a movement distance of a touch input related to the content satisfies a second reference, and insert or withdraw at least a part of the flexible display into or from the inner space of the housing so that a size of the display region is changed from the first size to the second size, in case that a movement distance of a touch input related to the content satisfies the first reference corresponding to the guide information.

According to various embodiments, the processor may be configured to display guide information related to a size change of the display region in at least a part of the display region having the first size set based on at least one of a movement direction of a touch input related to the content or a direction in which a size of the display region can be changed.

According to various embodiments, the processor may be configured to identify a reference position of the content displayed in the display region having the first size, based on a touch input related to the content, and change a display position of the content so that the reference position of the content corresponds to the center of the display region having the second size, in case that a size of the display region is changed from the first size to the second size.

According to various embodiments, the processor may be configured to identify an expansion ratio or a reduction ratio of the content corresponding to a movement distance of a touch input related to the content, and determine that a touch input related to the content satisfies the first reference, in case that the expansion ratio or the reduction ratio of the content exceeds a reference ratio.

According to various embodiments, the processor may be configured to determine that a touch input related to the content satisfies the first reference, in case that a movement distance of a touch input related to the content exceeds a reference distance.

According to various embodiments, the processor may be configured to determine whether a size of the display region can be changed, in case that a touch input related to the content satisfies the first reference, and insert or withdraw at least a part of the flexible display into or from the inner space of the housing so that a size of the display region is changed to the second size different from the first size, in case that it is determined that a size of the display region can be changed.

According to various embodiments, the processor may be configured to expand or reduce the content displayed in the display region having the first size, based on a touch input related to the content, in case that it is determined that a size change of the display region is limited.

According to various embodiments, an electronic device (e.g., the electronic device 101 in FIG. 1, the electronic device 200 in FIG. 2A or FIG. 3A, or the electronic device 400 in FIG. 4) may include a housing (e.g., the housing 210 in FIG. 2A), a flexible display (e.g., the display module 160 in FIG. 1, the flexible display 230 in FIG. 2A, or the display 420 in FIG. 4) configured such that at least a part thereof can be inserted into or withdrawn from an inner space of the housing, and a processor (e.g., the processor 120 in FIG. 1 or the processor 410 in FIG. 4) operatively connected to the flexible display, wherein the processor may be configured to display at least a part of content in a display region of the flexible display, which has a first size set by at least a part of the flexible display, which is inserted into or withdrawn from an inner space of the housing, scroll the content displayed in the display region having the first size, based on a touch input related to the content, and insert or withdraw at least a part of the flexible display into or from the inner space of the housing so that a size of the display region is changed to a second size different from the first size, in case that a touch input related to the content satisfies a first reference.

According to various embodiments, the processor may determine that a touch input related to the content satisfies the first reference, in case that a movement distance of a touch input related to the content exceeds a first reference distance, or a scroll distance of the content exceeds a second reference distance.

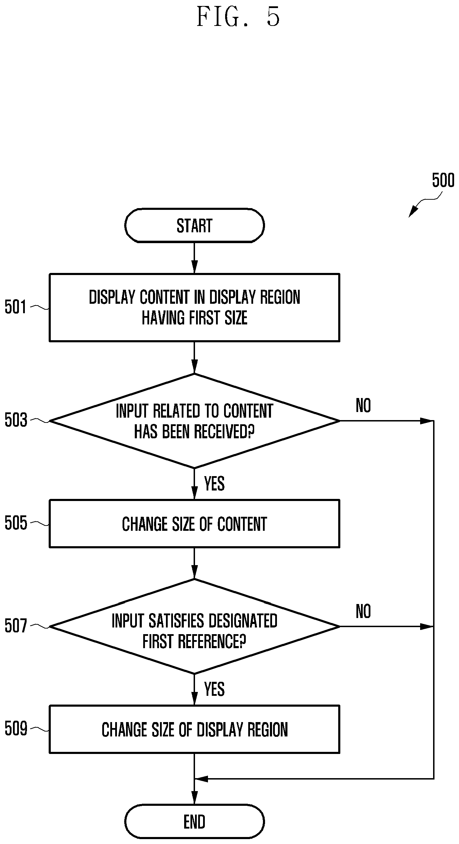

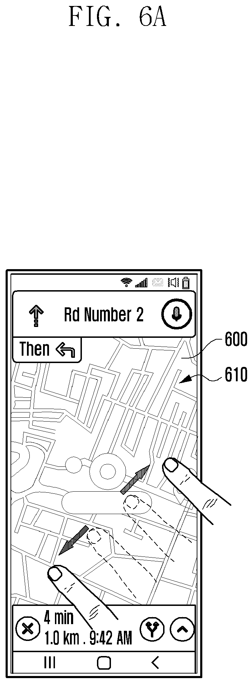

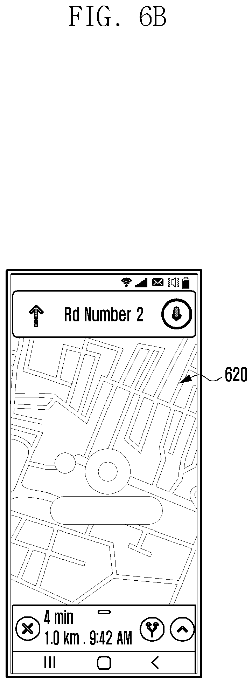

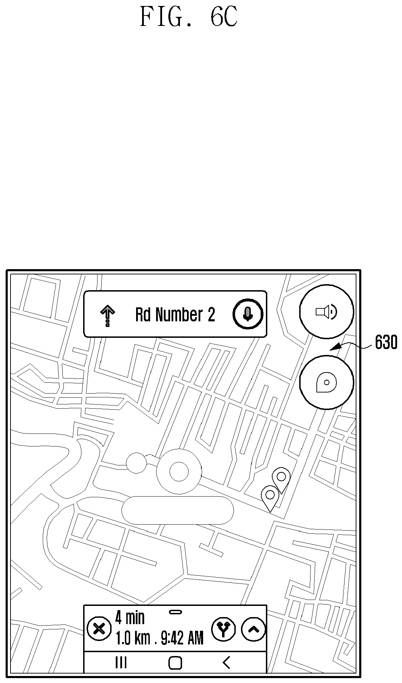

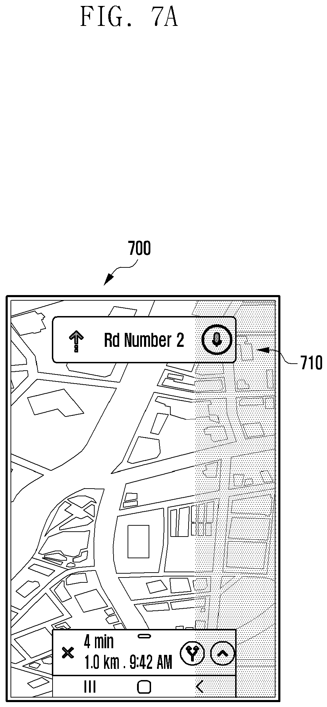

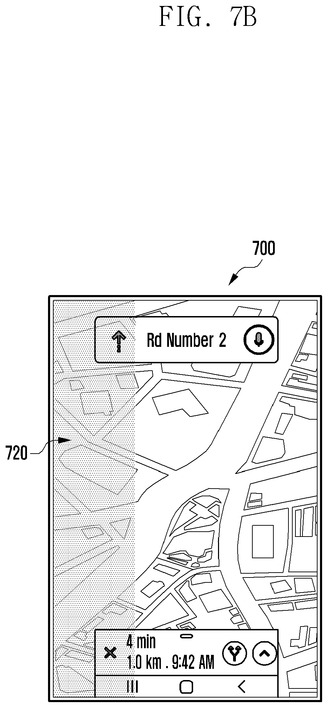

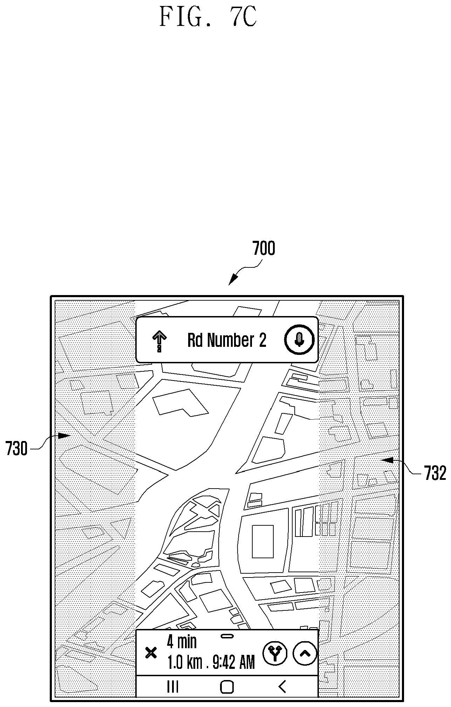

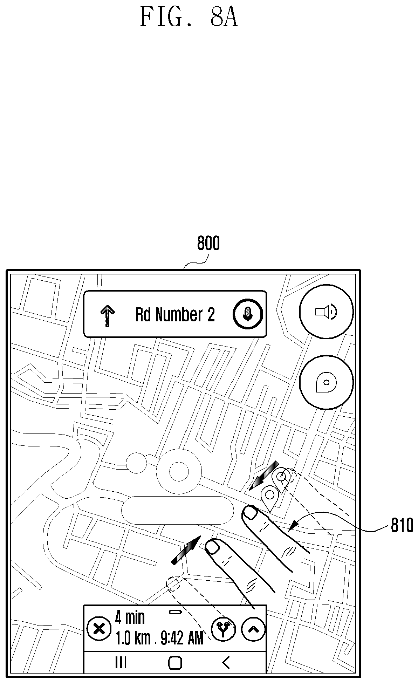

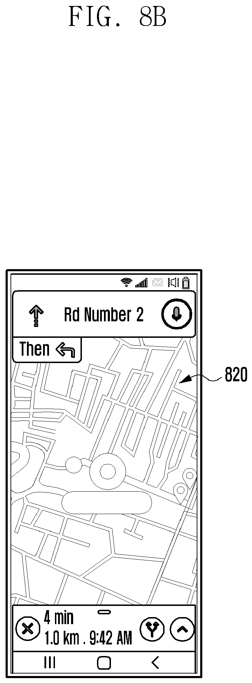

FIG. 5 is a flowchart 500 showing that a size of a display region is adjusted based on a size change of content in an electronic device according to various embodiments of the disclosure. In the embodiment below, operations may also be sequentially performed, but may not be necessarily sequentially performed. For example, the order of operations may also be changed, and at least two operations may also be performed in parallel. As an example, an electronic device in FIG. 5 may be the electronic device 101 in FIG. 1, the electronic device 200 in FIG. 2A or FIG. 3A, or the electronic device 400 in FIG. 4. As an example, at least a part of configurations in FIG. 5 will be described with reference to FIG. 6A to FIG. 8B. FIG. 6A, FIG. 6B, and FIG. 6C show an example for expanding a display region, based on a content expansion in an electronic device according to various embodiments of the disclosure. FIG. 7A, FIG. 7B, and FIG. 7C show an example for expanding a display region in an electronic device according to various embodiments of the disclosure. FIG. 8A and FIG. 8B show an example for reducing a display region, based on a content reduction in an electronic device according to various embodiments of the disclosure.

Referring to FIG. 5, according to various embodiments, in operation 501, an electronic device (e.g., the processor 120 in FIG. 1 or the processor 410 in FIG. 4) may display content in a display region of a display (e.g., the display 420 in FIG. 4), which has the first size. According to an embodiment, as FIG. 6A, in case that a sliding plate (e.g., the sliding plate 220 in FIG. 2A) is inserted in the inner space of a housing (e.g., the housing 210 in FIG. 2A) (e.g., a closed state), the processor 410 may control the display 420 so that the content 600 (e.g., a map image) is displayed in a display region of the display 420, which is exposed to the outside. According to an embodiment, as FIG. 8A, in case that a sliding plate (e.g., the sliding plate 220 in FIG. 2A) is withdrawn from the inner space of a housing (e.g., the housing 210 in FIG. 2A) (e.g., an open state), the processor 410 may control the display 420 so that the content 800 (e.g., a map image) is displayed in a display region of the display 420, which is exposed to the outside.

According to various embodiments, in operation 503, an electronic device (e.g., the processor 120 or 410) may identify whether an input related to content displayed in a display region of a display (e.g., the display 420 in FIG. 4), which has the first size, is received. According to an embodiment, the processor 410 may identify whether a touch input generated by approaching or touching the surface of the display 420 is detected.

According to various embodiments, in case that an input related to content has been received (e.g., "Yes" in operation 503), in operation 505, an electronic device (e.g., the processor 120 or 410) may change (e.g., expand or reduce) a size of content displayed in the display region having the first size, based on the input related to the content. According to an embodiment, as FIG. 6A, the processor 410 may receive an expansion input 610 related to the content 600 (e.g., a map image) displayed in the display region of the display 420 in a closed state. As FIG. 6B, the processor 410 may control the display 420 so that the content 620 displayed in the display region of the display 420 is expanded based on the expansion input 610. For example, the content 620 may be expanded based on a distance change of the expansion input 610 related to content. As an example, an expansion ratio of the content 620 may be set in proportion to a distance change (e.g., a movement distance of a touch input) between a first touch input and a second touch input which are related to content. According to an embodiment, as FIG. 8A, the processor 410 may receive a reduction input 810 related to the content 800 (e.g., a map image) displayed in the display region of the display 420 in an open state. As FIG. 8B, the processor 410 may control the display 420 so that the content 820 displayed in the display region of the display 420 is reduced based on the expansion input 810. For example, the content 820 may be reduced based on a distance change of the reduction input 710 related to content. As an example, a reduction ratio of the content 820 may be set in inverse proportion to a distance change between a first touch input and a second touch input which are related to content. According to an embodiment, in case that a length of a touch input related to content changes in a state where the touch input related to the content is maintained, the processor 410 may expand or reduce a size of content displayed in the display region of the display 420, based on a length change of the touch input related to content. As an example, a length of a touch input may include the distance between a first touch input and a second touch input for content expansion or reduction.

According to various embodiments, in operation 507, an electronic device (e.g., the processor 120 or 410) may identify whether an input related to content satisfies a designated first reference. According to an embodiment, the processor 410 may identify whether a length of an input related to a size adjustment of content displayed in the display region of the display 420 satisfies the designated first reference. For example, in case that a length of the expansion input 610 of content displayed in the display region of the display 420 exceeds the designated first reference length, the processor 410 may determine that the designated first reference is satisfied. In case that a length of the expansion input 610 of content displayed in the display region of the display 420 is equal to or less than the designated first reference length, the processor 410 may determine that the designated first reference is not satisfied. A length of the expansion input 610 of content may include a distance between a first touch input and a second touch input which are related to content expansion. For example, in case that a length of the reduction input 810 of content displayed in the display region of the display 420 exceeds the designated second reference length, the processor 410 may determine that the designated first reference is satisfied. A length of the reduction input 810 of content displayed in the display region of the display 420 is equal to or less than the designated second reference length, the processor 410 may determine that the designated first reference is not satisfied. A length of the reduction input 810 of content may include a distance between a first touch input and a second touch input which are related to content reduction.

According to various embodiments, in case that an input related to content satisfies the designated first reference (e.g., "Yes" in operation 507), in operation 509, an electronic device (e.g., the processor 120 or 410) may change a size of the display region to the second size. According to an embodiment, in case that a length of an input related to expansion of content displayed in the display region of the display 420 exceeds the designated first reference length, as FIG. 6C, the processor 410 may control the display 420 so that a size of a display region of the display 420 is expanded 630. For example, as FIG. 6C, the processor 410 may control the display 420 so that a size of a display region is expanded 620 by withdrawing a sliding plate (e.g., the sliding plate 220 in FIG. 2A) from the inner space of a housing (e.g., the housing 210 in FIG. 2A). According to an embodiment, in case that a length of an input related to reduction of content displayed in the display region of the display 420 exceeds the designated second reference length, as FIG. 6A, the processor 410 may control the display 420 so that a size of a display region of the display 420 is reduced. For example, the processor 410 may control the display 420 so that a size of the display region is reduced by inserting a sliding plate (e.g., the sliding plate 220 in FIG. 2A) into the inner space of a housing (e.g., the housing 210 in FIG. 2A).

According to various embodiments, in case that an input related to content is not received (e.g., "No" in operation 503), or an input related to content does not satisfy the designated first reference (e.g., "No" in operation 507), an electronic device (e.g., the processor 120 or 410) may end the embodiment for a size adjustment of a display region.

According to various embodiments, in case that an input related to content satisfies the designated first reference, an electronic device (e.g., the processor 120 or 410) may selectively adjust a size of the display region, based on a state of the display region.

According to an embodiment, as FIG. 6A, in case that the expansion input 610 related to the content 600 (e.g., a map image) displayed in the display region of the display 420 has been received in a closed state, the processor 410 may control the display 420 so that content is expanded and a size of the display region size is expanded as FIG. 6B and FIG. 6C.

According to an embodiment, as FIG. 8A, in case that the reduction input 810 related to the content 800 (e.g., a map image) displayed in the display region of the display 420 has been received in an open state, the processor 410 may control the display 420 so that content is reduced and a size of the display region size is reduced as FIG. 8B and FIG. 6A.

According to an embodiment, as FIG. 6A, in case that a reduction input related to the content 600 (e.g., a map image) displayed in the display region of the display 420 has been received in a closed state, the processor 410 may determine that a size of the display region cannot be reduced. For example, the processor 410 may control the display 420 so that the content 600 (e.g., a map image) displayed in the display region of the display 420 is reduced in a closed state.

According to an embodiment, as FIG. 8A, in case that an expansion input related to the content 800 (e.g., a map image) displayed in the display region of the display 420 has been received in an open state, the processor 410 may determine that a size of the display region cannot be expanded. For example, the processor 410 may control the display 420 so that the content 800 (e.g., a map image) displayed in the display region of the display 420 is expanded in an open state.

According to various embodiments, the electronic device 400 may adjust a size (or a size of a display region) of the display 420, based on a size change amount (or a size change ratio) of content displayed in the display region of the display 420. According to an embodiment, in case that an expansion ratio of content displayed in the display region of the display 420 exceeds the designated first reference ratio, the processor 410 may control the display 420 so that a size of the display region of the display 420 is expanded. For example, an expansion ratio of content may be set in proportion to a distance change between a first touch input and a second touch input which are related to content. As an example, an expansion ratio of content may be set relatively high as the distance between a first touch input and a second touch input related to content increases. According to an embodiment, in case that a reduction ratio of content displayed in the display region of the display 420 exceeds the designated second reference ratio, the processor 410 may control the display 420 so that a size of the display region of the display 420 is reduced. For example, a reduction ratio of content may be set in reverse proportion to a distance change between a first touch input and a second touch input which are related to content. As an example, a reduction ratio of content may be set relatively high as the distance between a first touch input and a second touch input related to content decreases.

According to various embodiments, in case that a size of the display 420 can be changed in various directions, the electronic device 400 may set a size change direction of the display 420. According to an embodiment, in case that an expansion event in a first direction occurs, as FIG. 7A, the processor 410 may control the display 420 so that a size of the display region is expanded in the first direction 710 (e.g., the right direction). For example, the display region may be expanded as a sliding plate (e.g., the sliding plate 220 in FIG. 2A) is withdrawn from the inner space of a housing (e.g., the housing 210 in FIG. 2A) in the first direction. According to an embodiment, in case that an expansion event in a second direction occurs, as FIG. 7B, the processor 410 may control the display 420 so that a size of the display region is expanded in the second direction 720 (e.g., the left direction). For example, the display region may be expanded as a sliding plate (e.g., the sliding plate 220 in FIG. 2A) is withdrawn from the inner space of a housing (e.g., the housing 210 in FIG. 2A) in the second direction. According to an embodiment, in case that an expansion event occurs in both directions, as FIG. 7C, the processor 410 may control the display 420 so that a size of the display region is expanded in the first direction 732 (e.g., the right direction) and the second direction 730 (e.g., the left direction). For example, the display region may be expanded as a sliding plate (e.g., the sliding plate 220 in FIG. 2A) is withdrawn from the inner space of a housing (e.g., the housing 210 in FIG. 2A) in the first direction and the second direction.

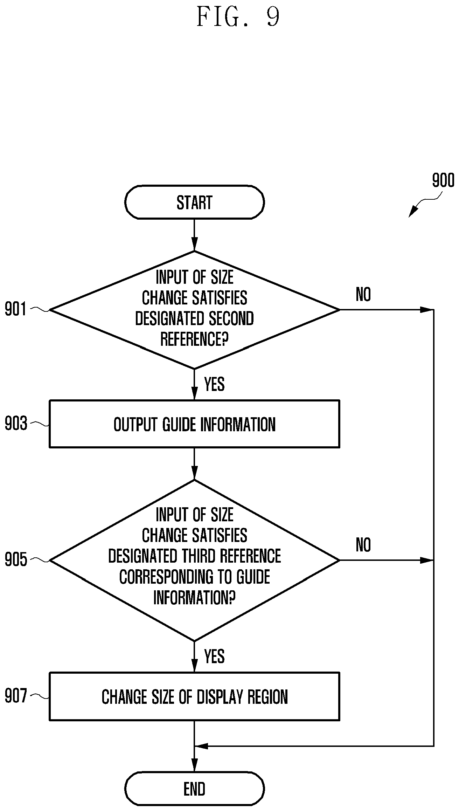

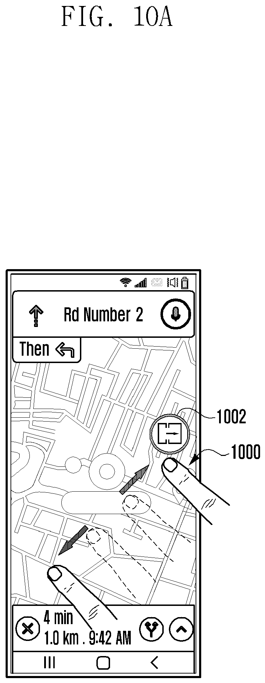

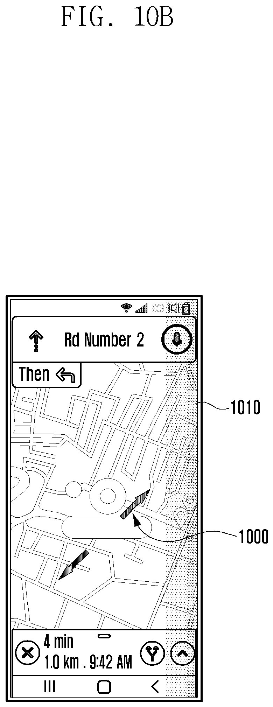

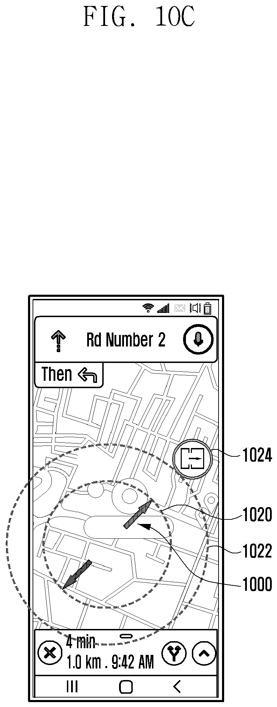

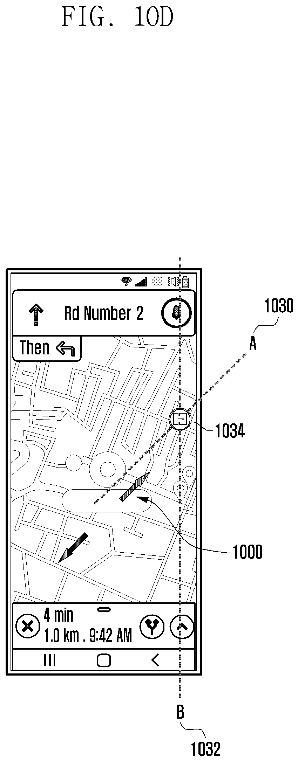

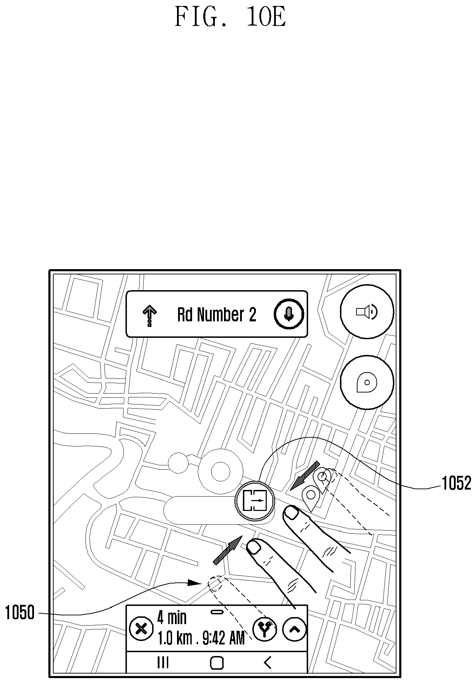

FIG. 9 is a flowchart 900 showing that guide information related to a size adjustment of a display region is output in an electronic device according to various embodiments of the disclosure. According to an embodiment, operations in FIG. 9 may be detailed operations of operation 507 and operation 509 in FIG. 5. In the embodiment below, operations may also be sequentially performed, but may not be necessarily sequentially performed. For example, the order of operations may also be changed, and at least two operations may also be performed in parallel. As an example, an electronic device in FIG. 9 may be the electronic device 101 in FIG. 1, the electronic device 200 in FIG. 2A or FIG. 3A, or the electronic device 400 in FIG. 4. As an example, at least a part of configurations in FIG. 9 will be described with reference to FIG. 10A to FIG. 10E. FIG. 10A, FIG. 10B, FIG. 10C, FIG. 10D, and FIG. 10E show an example of guide information related to a size adjustment of a display region in an electronic device according to various embodiments of the disclosure.

Referring to FIG. 9, according to various embodiments, in operation 901, an electronic device (e.g., the processor 120 in FIG. 1 or the processor 410 in FIG. 4) may identify whether an input related to a size change (e.g., expansion or reduction) of content satisfies a designated second reference. According to an embodiment, in case that a length of the input 610 related to expansion of content displayed in the display region of the display 420 in FIG. 6A exceeds the designated fifth reference length, the processor 410 may determine that the designated second reference is satisfied. As another example, in case that a length of the input 610 related to expansion of content displayed in the display region of the display 420 in FIG. 6A is equal to or less than the designated fifth reference length, the processor 410 may determine that the designated second reference is not satisfied. According to an embodiment, in case that a length of the input 810 related to reduction of content displayed in the display region of the display 420 in FIG. 8A exceeds the designated sixth reference length, the processor 410 may determine that the designated second reference is satisfied. As another example, in case that a length of the input 810 related to reduction of content displayed in the display region of the display 420 in FIG. 8A is equal to or less than the designated sixth reference length, the processor 410 may determine that the designated second reference is not satisfied.

According to various embodiments, in case that an input related to a size change (e.g., expansion or reduction) of content satisfies the designated second reference (e.g., "Yes" of operation 901), in operation 903, an electronic device (e.g., the processor 120 or 410) may output guide information related to a size change of the display region of the display 420. According to an embodiment, as FIG. 10A, the processor 410 may control the display 420 so that an icon 1002 related to expansion of a display region is displayed at a position spaced apart by a designated distance with reference to a point at which an input has been detected, to correspond to a movement direction of an input 1000 for content expansion. According to an embodiment, as FIG. 10B, the processor 410 may control the display 420 so that information 1010 related to extension of the display region is displayed in at least a partial region of the edge of a display region. According to an embodiment, as FIG. 10C, the processor 410 may control the display 420 so that an icon 1024 related to the extension of a display region is displayed based on circular graphics 1020 and 1022 displayed with reference to a point at which the input 1000 for content expansion has been detected. According to an embodiment, as FIG. 10D, the processor 410 may control the display 420 so that information 1034 related to expansion of a display region is displayed at a point at which a movement direction 1030 of the input 1000 for content expansion and at least a partial region 1032 of the edge of the display region overlap each other. According to an embodiment, as FIG. 10E, the processor 410 may control the display 420 so that an icon 1052 related to reduction of a display region is displayed at a position spaced apart by a designated distance with reference to a point at which an input has been detected, to correspond to a movement direction of an input 1050 for content reduction.

According to various embodiments, in operation 905, an electronic device (e.g., the processor 120 or 410) may identify whether an input related to a size change (e.g., expansion or reduction) of content satisfies a designated third reference corresponding to guide information. As an example, the designated third reference corresponding to guide information may include a condition set based on a position of guide information displayed in the display region of the display 420. According to an embodiment, in case that a length of the expansion input 610 of content displayed in the display region of the display 420 exceeds the designated first reference length set based on guide information, the processor 410 may determine that the designated third reference is satisfied. As another example, in case that a length of the expansion input 610 of content displayed in the display region of the display 420 is equal to or less than the designated first reference length, the processor 410 may determine that the designated third reference is not satisfied. According to an embodiment, in case that a length of the reduction input 810 of content displayed in the display region of the display 420 exceeds the designated second reference length set based on guide information, the processor 410 may determine that the designated third reference is satisfied. As another example, in case that a length of the reduction input 810 of content displayed in the display region of the display 420 is equal to or less than the designated second reference length, the processor 410 may determine that the designated third reference is not satisfied.

According to various embodiments, in case that an input related to a size change (e.g., expansion or reduction) of content satisfies the designated third reference corresponding to guide information (e.g., "Yes" of operation 905), in operation 907, an electronic device (e.g., the processor 120 or 410) may change a size of the display region to the second size.

According to various embodiments, in case that an input related to a size change (e.g., expansion or reduction) of content does not satisfy the designated second reference or the designated third reference (e.g., "No" in operation 901 or "No" in operation 905), an electronic device (e.g., the processor 120 or 410) may end the embodiment for a size adjustment of the display region.

According to various embodiments, the electronic device 400 may display guide information related to a size (or a size of a display region) adjustment of the display 420, based on a size change amount (or a size change ratio) of content displayed in the display region of the display 420.

According to various embodiments, a size of the display region of the display 420 may be variable based on a length of an input related to content and/or a size change amount of content displayed in the display region of the display 420. According to an embodiment, a size of the display region of the display 420 may also be set to the size of an intermediate state, based on a length of an input related to content and/or a size change amount of content displayed in the display region of the display 420.

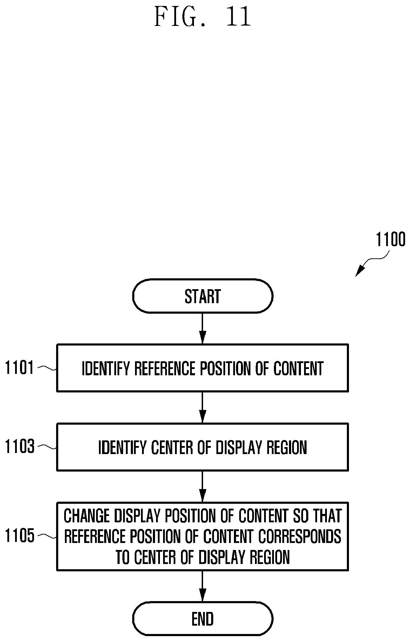

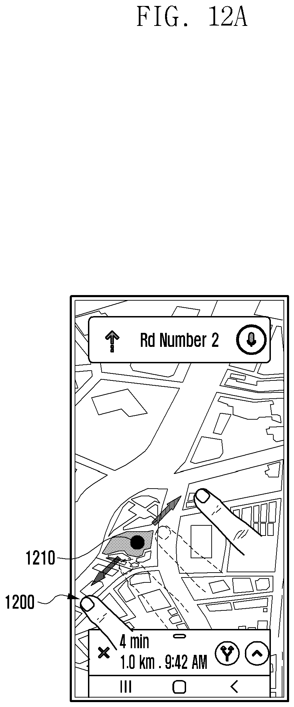

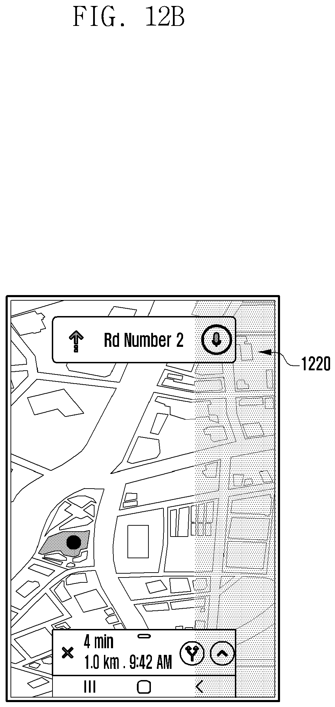

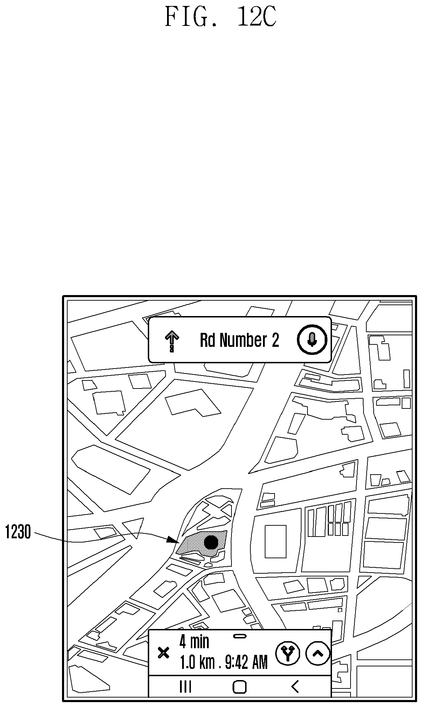

FIG. 11 is a flowchart 1100 sowing that a content position is changed in an electronic device according to various embodiments of the disclosure. According to an embodiment, operations in FIG. 11 may be operations after operation 509 in FIG. 5. In the embodiment below, operations may also be sequentially performed, but may not be necessarily sequentially performed. For example, the order of operations may also be changed, and at least two operations may also be performed in parallel. As an example, an electronic device in FIG. 11 may be the electronic device 101 in FIG. 1, the electronic device 200 in FIG. 2A or FIG. 3A, or the electronic device 400 in FIG. 4. As an example, at least a part of configurations in FIG. 11 will be described with reference to FIG. 12A to FIG. 12C. FIG. 12A, FIG. 12B, and FIG. 12C show an example for changing a position of content in an electronic device according to various embodiments of the disclosure.

Referring to FIG. 11, according to various embodiments, in case that a size of the display is changed (e.g., operation 509 of FIG. 5), in operation 1101, an electronic device (e.g., the processor 120 in FIG. 1 or the processor 410 in FIG. 4) may identify a reference position (e.g., the center of a size change) of the resized content. According to an embodiment, as FIG. 12A, the processor 410 may receive an expansion input 1210 related to content 1200 (e.g., a map image) displayed in a display region of the display 420. The processor 410 may determine the center point between a first touch point and a second touch point of the expansion input 1210 as a reference position of the content 1200.

According to various embodiments, in operation 1103, an electronic device (e.g., the processor 120 or 410) may identify the center region of the display region of which the size has changed. According to an embodiment, as FIG. 12B, the processor 410 may identify the center region of the display region expanded in a first direction 1220.

According to various embodiments, in operation 1105, an electronic device (e.g., the processor 120 or 410) may change a display position of content of which the size has changed, so that the center region of the resized display region and the reference position of the resized (e.g., expanded or reduced) content correspond to each other. According to an embodiment, as FIG. 12C, the processor 410 may change a position of the content 1200 so that the center region of the display region, which is expanded in the first direction 1220, and the reference position of the expanded content 1200 are matched 1230 with each other.

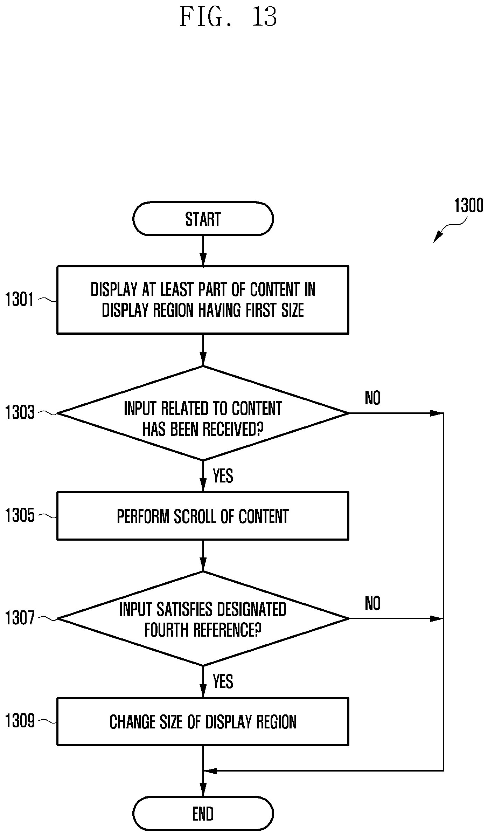

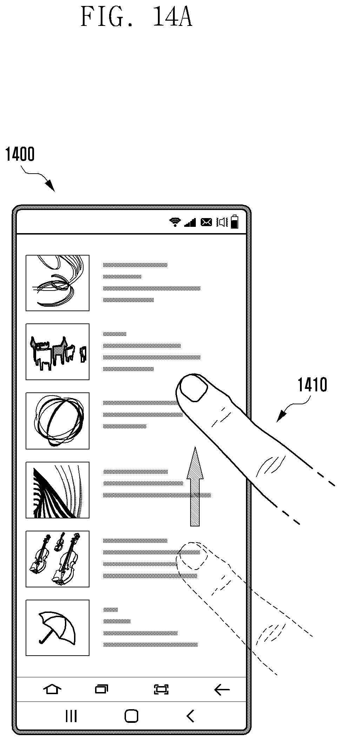

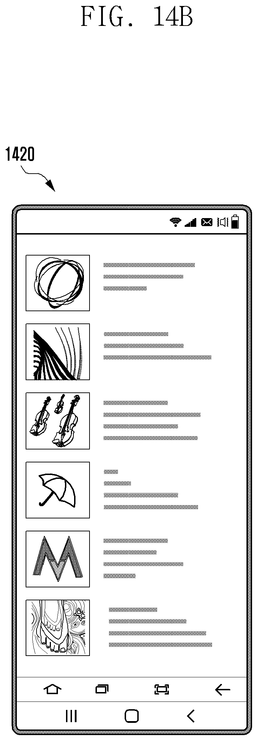

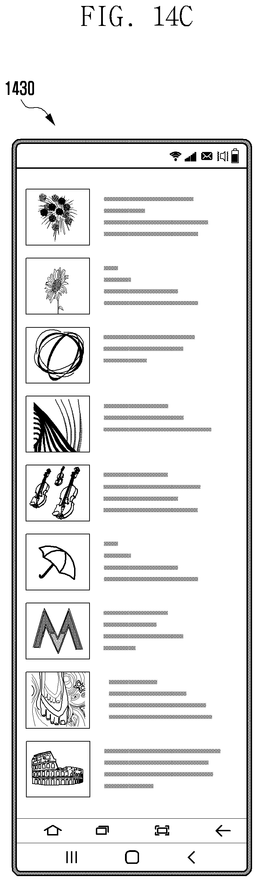

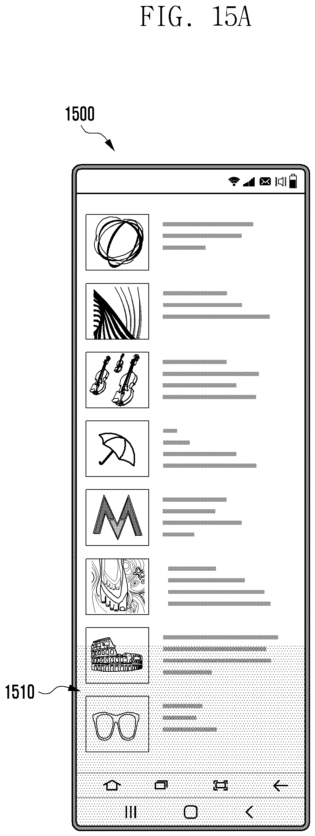

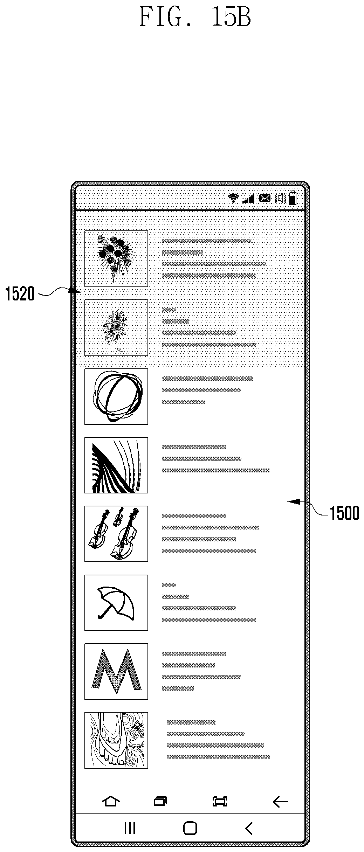

FIG. 13 is a flowchart 1300 showing that a size of a display region is adjusted based on scroll of content in an electronic device according to various embodiments of the disclosure. In the embodiment below, operations may also be sequentially performed, but may not be necessarily sequentially performed. For example, the order of operations may also be changed, and at least two operations may also be performed in parallel. As an example, an electronic device in FIG. 13 may be the electronic device 101 in FIG. 1, the electronic device 200 in FIG. 2A or FIG. 3A, or the electronic device 400 in FIG. 4. As an example, at least a part of configurations in FIG. 13 will be described with reference to FIG. 14A to FIG. 15B. FIG. 14A, FIG. 14B, and FIG. 14C show an example for expanding a display region, based on scroll of content in an electronic device according to various embodiments of the disclosure. FIG. 15A and FIG. 15B show another example for expanding a display region in an electronic device according to various embodiments of the disclosure.

Referring to FIG. 13, according to various embodiments, in operation 1301, an electronic device (e.g., the processor 120 in FIG. 1 or the processor 410 in FIG. 4) may display at least a part of content in the display region of a display (e.g., the display 420 in FIG. 4), which has the first size. According to an embodiment, as FIG. 14A, in case that a sliding plate (e.g., the sliding plate 220 in FIG. 2A) is inserted in the inner space of a housing (e.g., the housing 210 in FIG. 2A) (e.g., a closed state), the processor 410 may control the display 420 so that at least a part of content 1400 (e.g., a video list) is displayed in the display region of the display 420.

According to various embodiments, in operation 1303, an electronic device (e.g., the processor 120 or 410) may identify whether an input related to content displayed in the display region having the first size is received. According to an embodiment, the processor 410 may identify whether a touch input generated by approaching or touching the surface of the display 420 is detected.

According to various embodiments, in case that an input related to content has been received (e.g., "Yes" in operation 1303), in operation 1305, an electronic device (e.g., the processor 120 or 410) may perform scroll of content displayed in the display region having the first size, based on the input related to the content. According to an embodiment, as FIG. 14A, the processor 410 may receive a scroll input 1410 related to the content 1400 (e.g., a video list) displayed in the display region of the display 420 in a closed state. As FIG. 14B, the processor 410 may scroll content 1420 displayed in the display region of the display 420 in a third direction (e.g., the up direction), based on the scroll input 1410. For example, the content 1420 may be scrolled based on a distance change of the scroll input 1410 related to content or a change in the number of times of a continuous input. As an example, the scroll distance of the content 1420 may be set in proportion to a distance change of an input related to content or the number of times of a continuous input.

According to various embodiments, in operation 1307, an electronic device (e.g., the processor 120 or 410) may identify whether an input related to content satisfies a designated fourth reference. According to an embodiment, the processor 410 may identify whether a length (or the number of times of an input) of an input related to scroll of content displayed in the display region of the display 420 satisfies the designated fourth reference. For example, in case that a length of the scroll input 1410 of content displayed in the display region of the display 420 exceeds a designated third reference length, the processor 410 may determine that the designated fourth reference is satisfied. As another example, in case that a length of the scroll input 1410 of content displayed in the display region of the display 420 is equal to or less than the designated fourth reference length, the processor 410 may determine that the designated third reference is not satisfied. For example, in case that the number of times of the continuous scroll input 1410 of content displayed in the display region of the display 420 exceeds the number of times of the designated first reference, the processor 410 may determine that the designated fourth reference is satisfied. As another example, in case that the number of times of the scroll input 1410 of content displayed in the display region of the display 420 is equal to or less than the number of times of the designated first reference, the processor 410 may determine that the designated fourth reference is not satisfied.

According to various embodiments, in case that an input related to content satisfies the designated fourth reference (e.g., "Yes" in operation 1307), in operation 1309, an electronic device (e.g., the processor 120 or 410) may change a size of the display region to the second size. According to an embodiment, in case that a length of an input related to scroll of content displayed in the display region of the display 420 exceeds the designated fourth reference length, as FIG. 14C, the processor 410 may control the display 420 so that a size of the display region of the display 420 is expanded 1430.

According to various embodiments, in case that an input related to content is not received (e.g., "No" in operation 1303), or an input related to content does not satisfy the designated fourth reference (e.g., "No" in operation 1407), an electronic device (e.g., the processor 120 or 410) may end the embodiment for a size adjustment of the display region.

According to various embodiments, the electronic device 400 may adjust a size (or a size of a display region) of the display 420, based on a change ratio (e.g., a scroll distance) of content displayed in the display region of the display 420. According to an embodiment, in case that a scroll length of content displayed in the display region of the display 420 exceeds the designated fourth reference length, the processor 410 may control the display 420 so that a size of the display region of the display 420 is expanded.

According to various embodiments, in case that a size of the display region of the display 420 can be changed in various directions, the electronic device 400 may set a size change direction of the display region of the display 420. According to an embodiment, in case that an expansion event occurs in a fourth direction (e.g., the down direction), as in FIG. 15A, the processor 410 may control the display 420 so that a size of the display region is expanded in the fourth direction 1510. For example, the display region may be expanded as a sliding plate (e.g., the sliding plate 220 in FIG. 2A) is withdrawn from the inner space of a housing (e.g., the housing 210 in FIG. 2A) in the fourth direction. According to an embodiment, in case that an expansion event occurs in the third direction (e.g., the up direction), as in FIG. 15B, the processor 410 may control the display 420 so that a size of the display region is expanded in the third direction 1520. For example, the display region may be expanded as a sliding plate (e.g., the sliding plate 220 in FIG. 2A) is withdrawn from the inner space of a housing (e.g., the housing 210 in FIG. 2A) in the third direction. According to an embodiment, in case that an expansion event occurs in both directions, the processor 410 may control the display 420 so that a size of the display region is expanded in the third direction and the fourth direction.

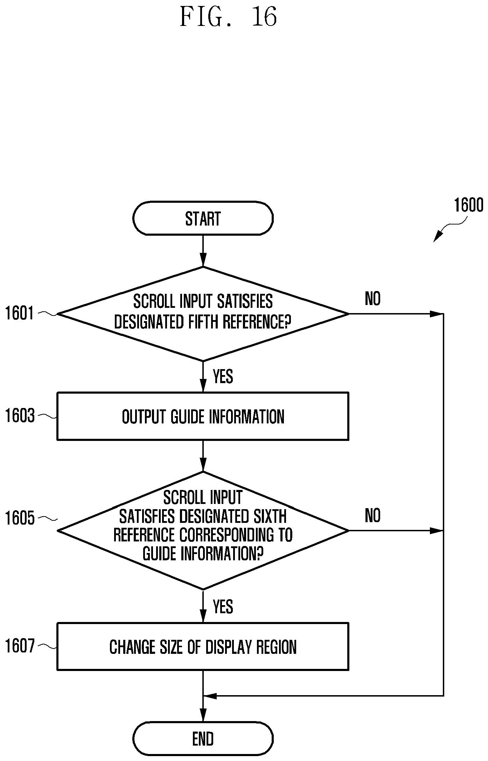

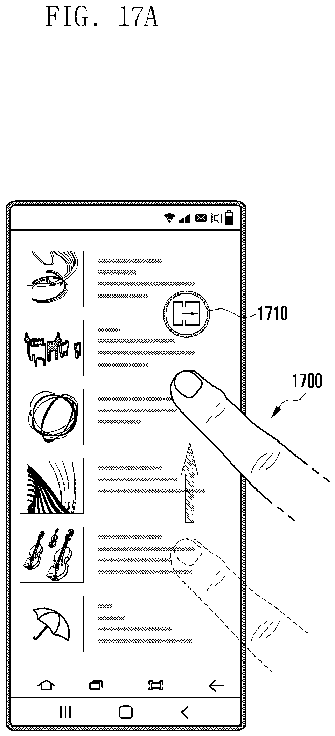

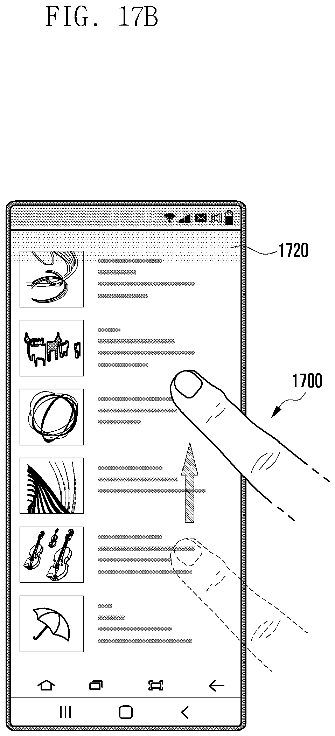

FIG. 16 is a flowchart 1600 showing that guide information is output based on scroll of content in an electronic device according to various embodiments of the disclosure. According to an embodiment, operations in FIG. 16 may be detailed operations of operation 1307 and operation 1309 in FIG. 13. In the embodiment below, operations may also be sequentially performed, but may not be necessarily sequentially performed. For example, the order of operations may also be changed, and at least two operations may also be performed in parallel. As an example, an electronic device in FIG. 16 may be the electronic device 101 in FIG. 1, the electronic device 200 in FIG. 2A or FIG. 3A, or the electronic device 400 in FIG. 4. As an example, at least a part of configurations in FIG. 16 will be described with reference to FIG. 17A and FIG. 17B. FIG. 17A and FIG. 17B shows another example of guide information related to a size adjustment of a display region in an electronic device according to various embodiments of the disclosure.

Referring to FIG. 16, according to various embodiments, in operation 1601, an electronic device (e.g., the processor 120 in FIG. 1 or the processor 410 in FIG. 4) may identify whether an input related to scroll of content satisfies a designated fifth reference. According to an embodiment, in case that a length of the input 1410 related to scroll of content displayed in the display region of the display 420 in FIG. 14A exceeds the designated seventh reference length, the processor 410 may determine that the designated fifth reference is satisfied. As another example, in case that a length of the input 1410 related to scroll of content displayed in the display region of the display 420 in FIG. 14A is equal to or less than the designated seventh reference length, the processor 410 may determine that the designated fifth reference is not satisfied.

According to various embodiments, in case that an input related to scroll of content satisfies the designated fifth reference (e.g., "Yes" of operation 1601), in operation 1603, an electronic device (e.g., the processor 120 or 410) may output guide information related to a size change of the display region of the display 420. According to an embodiment, as FIG. 17A, the processor 410 may control the display 420 so that an icon 1710 related to expansion of the display region of the display 420 is displayed at a position spaced apart by a designated distance with reference to a point at which an input has been detected, to correspond to a movement direction of an input 1700 for content scroll. According to an embodiment, as FIG. 17B, the processor 410 may control the display 420 so that information 1720 related to extension of the display region of the display 420 is displayed in at least a partial region of the edge in a fifth direction corresponding to the scroll direction of the display region.

According to various embodiments, in operation 905, an electronic device (e.g., the processor 120 or 410) may identify whether an input related to scroll of content satisfies a designated sixth reference corresponding to guide information. As an example, the designated sixth reference corresponding to guide information may include a condition set based on the position of the guide information displayed in the display region of the display 420. According to an embodiment, in case that a length of the scroll input 1410 of content displayed in the display region of the display 420 exceeds the designated third reference length set based on guide information, the processor 410 may determine that the designated sixth reference is satisfied. As another example, in case that a length of the scroll input 1410 of content displayed in the display region of the display 420 is equal to or less than the designated third reference length, the processor 410 may determine that the designated sixth reference is not satisfied.

According to various embodiments, in case that an input related to scroll of content satisfies the designated sixth reference corresponding to guide information (e.g., "Yes" of operation 1605), in operation 1607, the electronic device (e.g., processor 120 or 410) may change a size of the display to the second size.

According to various embodiments, in case that an input related to scroll of content does not satisfy the designated fifth reference or the designated sixth reference (e.g., "No" in operation 1601 or "No" in operation 1605), an electronic device (e.g., the processor 120 or 410) may end the embodiment for a size adjustment of a display region.

According to various embodiments, the electronic device 400 may display guide information related to a size (or a size of a display region) adjustment of the display 420, based on a size change amount (e.g., a scroll length) of content displayed in the display region of the display 420.

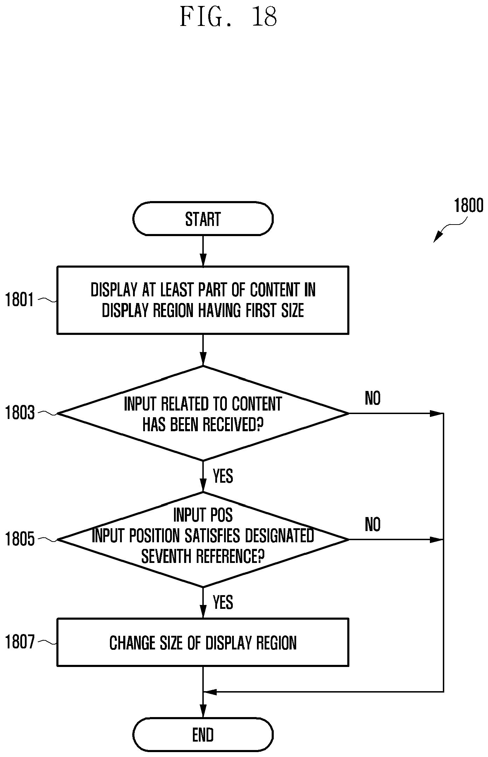

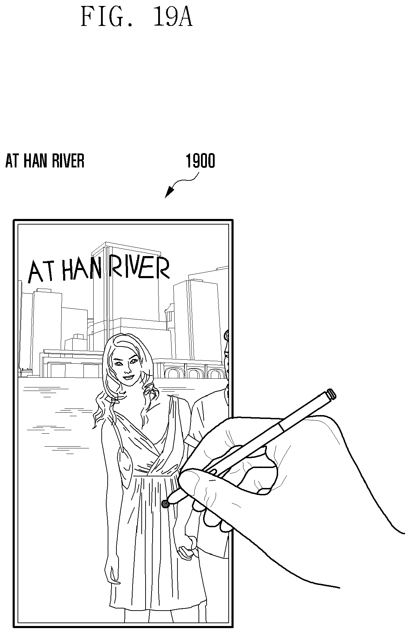

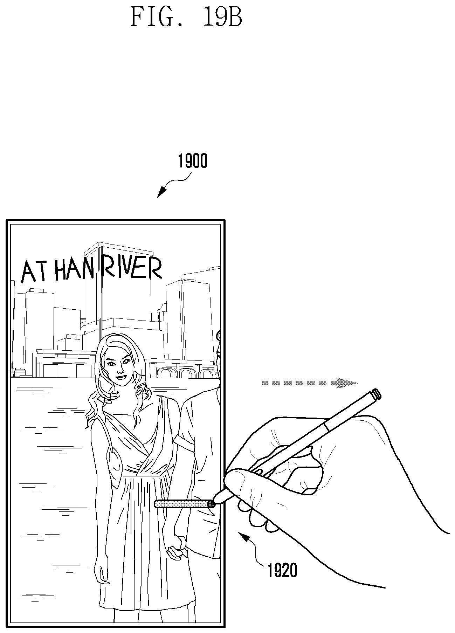

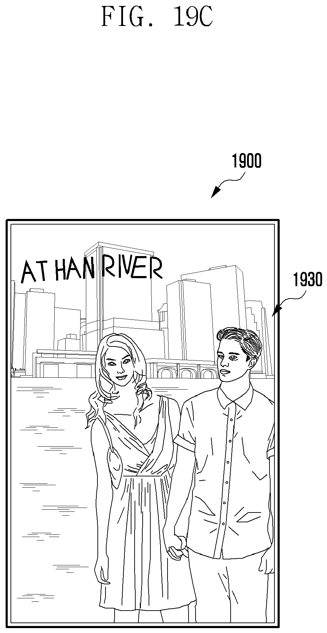

FIG. 18 is a flowchart 1800 showing that a size of a display region is adjusted based on an input point in an electronic device according to various embodiments of the disclosure. In the embodiment below, operations may also be sequentially performed, but may not be necessarily sequentially performed. For example, the order of operations may also be changed, and at least two operations may also be performed in parallel. As an example, an electronic device in FIG. 18 may be the electronic device 101 in FIG. 1, the electronic device 200 in FIG. 2A or FIG. 3A, or the electronic device 400 in FIG. 4. As an example, at least a part of configurations in FIG. 18 will be described with reference to FIG. 19A to FIG. 19C. FIG. 19A, FIG. 19B, and FIG. 19C show an example for expanding a size of a display region, based on an input point in an electronic device according to various embodiments of the disclosure.

Referring to FIG. 18, according to various embodiments, in operation 1801, an electronic device (e.g., the processor 120 in FIG. 1 or the processor 410 in FIG. 4) may display content in a display (e.g., the display 420 FIG. 4) having the first size. According to an embodiment, as FIG. 19A, the processor 410 may control the display 420 so that content 1900 (e.g., a picture) in the display region of the display 420, which has the first size (e.g., a closed state), is displayed.

According to various embodiments, in operation 1803, an electronic device (e.g., the processor 120 or 410) may identify whether an input related to content displayed in the display region having the first size is received. According to an embodiment, the processor 410 may identify whether a touch input generated by approaching or touching the surface of the display 420 is detected. For example, the processor 410 may identify whether a touch input by a stylus pen is detected.

According to various embodiments, in case that an input related to content has been received (e.g., "Yes" in operation 1803), in operation 1805, the electronic device (e.g., the processor 120 or 410) may identify whether a position of the input related to the content satisfies a designated seventh reference. According to an embodiment, as FIG. 19A, in case that an input related to content displayed in the display region having the first size has been received, the processor 410 may control the display 420 so that additional content (e.g., "at the Han River") is displayed based on the input related to the content. According to an embodiment, as FIG. 19B, in case that an input 1920 by a stylus pen is detected in a predefined region of a display region in which content is displayed, the processor 410 may determine that the designated seventh reference is satisfied. For another example, in case that the input 1920 by a stylus pen is detected in another region other than a predefined region of a display region in which content is displayed, the processor 410 may determine that the designated seventh reference is not satisfied. As an example, the predefined region may include at least a partial region of the edge in a direction, in which the display 420 is expandable, of the display region. As another example, the predefined region may include at least a partial region of the edge of a display region.

According to various embodiments, in case that an input related to content satisfies the designated seventh reference (e.g., "Yes" in operation 1805), in operation 1807, an electronic device (e.g., the processor 120 or 410) may change a size of a display region to the second size. According to an embodiment, in case that the input 1920 by a stylus pen is detected in a predefined region of a display region in which content is displayed, as FIG. 19C, the processor 410 may control the display 420 so that a size of the display region is expanded 1930. For example, the processor 410 may control the display 420 so that a size of the display region is expanded 1930 by withdrawing a sliding plate (e.g., the sliding plate 220 in FIG. 2A) from the inner space of a housing (e.g., the housing 210 in FIG. 2A).

According to various embodiments, in case that an input related to content is not received (e.g., "No" in operation 1803), or a position of an input related to content does not satisfy the designated seventh reference (e.g., "No" in operation 1805), an electronic device (e.g., the processor 120 or 410) may end the embodiment for a size adjustment of the display region.

According to various embodiments, an electronic device (e.g., the processor 120 or 410) may change a size of a display region to the second size, based on a size of additional content generated based on an input related to content displayed in the display region having the first size. According to an embodiment, as FIG. 19A, the processor 410 may generate additional content (e.g., "at the Han River"), based on an input related to content displayed in the display region having the first size. According to an embodiment, in case that a size of additional content satisfies a designated ninth reference, based on an input related to content, the processor 410 may control the display 420 so that a size of the display region is changed to the second size. For example, a size of additional content may include a size of a region in which additional information is displayed to overlap with content, based on an input related to content displayed in the display region.

According to various embodiments, an electronic device (e.g., the processor 120 or 410) may adjust a size of the display region of the display 420 in stages. According to an embodiment, in case that an expansion input related to content displayed in the display region of the display 420 satisfies a designated first reference level, the processor 410 may expand the display region having the first size to the second size corresponding to the designated first reference level. In case that an expansion input related to content displayed in the display region of the display 420 satisfies a designated second reference level, the processor 410 may expand a size of the display region having the second size to a third size corresponding to the designated second reference level.

According to various embodiments, a method for operating an electronic device (e.g., the electronic device 101 in FIG. 1, the electronic device 200 in FIG. 2A or FIG. 3A, or the electronic device 400 in FIG. 4) may include displaying content in a display region of a flexible display, which has a first size set by at least a part of the flexible display (e.g., the display module 160 in FIG. 1, the flexible display 230 in FIG. 2A, or the display 420 in FIG. 4), which is inserted into or withdrawn from an inner space of a housing (e.g., the housing 210 in FIG. 2A) of the electronic device, expanding or reducing the content displayed in the display region having the first size, based on a touch input related to the content, and inserting or withdrawing at least a part of the flexible display into or from the inner space of the housing so that a size of the display region is changed to a second size different from the first size, in case that a touch input related to the content satisfies a first reference.

According to various embodiments, the inserting or withdrawing may include expanding or reducing the content displayed in the display region having the first size at an expansion ratio or reduction ratio corresponding to a movement distance of a touch input related to the content.

According to various embodiments, the method may further include displaying guide information related to a size change of the display region in at least a part of the display region having the first size, in case that a movement distance of the touch input related to the content satisfies a second reference, and the inserting or withdrawing of the at least a part of the flexible display into or from the inner space of the housing may include inserting or withdrawing at least a part of the flexible display into or from the inner space of the housing so that a size of the display region is changed from the first size to the second size, in case that a movement distance of a touch input related to the content satisfies the first reference corresponding to the guide information.

According to various embodiments, the displaying of the guide information may include displaying guide information related to a size change of the display region in at least a part of the display region having the first size set based on at least one of a movement direction of a touch input related to the content or a direction in which a size of the display region can be changed.

According to various embodiments, the method may include identifying a reference position of the content displayed in the display region having the first size, based on a touch input related to the content, and changing a display position of the content so that the reference position of the content corresponds to the center of the display region having the second size, in case that a size of the display region is changed from the first size to the second size.

According to various embodiments, the inserting or withdrawing of the at least a part of the flexible display into or from the inner space of the housing may include identifying an expansion ratio or a reduction ratio of the content, based on a movement distance of a touch input related to the content, and inserting or withdrawing at least a part of the flexible display into or from the inner space of the housing so that a size of the display region is changed to a second size different from the first size, in case that the expansion ratio or the reduction ratio of the content exceeds a reference ratio.

According to various embodiments, the inserting or withdrawing of the at least a part of the flexible display into or from the inner space of the housing may include inserting or withdrawing at least a part of the flexible display into or from the inner space of the housing so that a size of the display region is changed to the second size different from the first size, in case that a movement distance of a touch input related to the content exceeds a reference distance.

According to various embodiments, the inserting or withdrawing of the at least a part of the flexible display into or from the inner space of the housing may include determining whether a size of the display region can be changed, in case that a touch input related to the content satisfies the first reference, and inserting or withdrawing at least a part of the flexible display into or from the inner space of the housing so that a size of the display region is changed to a second size different from the first size, in case that it is determined that a size of the display region can be changed.

According to various embodiments, the method may further include expanding or reducing the content displayed in the display region having the first size, based on a touch input related to the content, in case that it is determined that a size change of the display region is limited.

Embodiments of the disclosure disclosed in the specification and the drawings are merely specific examples presented to easily describe the technical content according to the embodiments of the disclosure and to help understanding of the embodiments of the disclosure, and are not intended to limit the scope of embodiments of the disclosure. Accordingly, in connection with the scope of various embodiments of the disclosure, it should be interpreted that not only embodiments disclosed herein but also all changed or modified forms derived based on the technical idea of various embodiments of the disclosure are included in the scope of various embodiments of the disclosure.

## Claims

1. An electronic device comprising:
a housing;
a flexible display configured such that at least a part thereof can be inserted into or withdrawn from an inner space of the housing; and
a processor operatively connected to the flexible display,
wherein the processor is configured to:
display content in a display region of the flexible display, which has a first size set by at least a part of the flexible display, which is inserted into or withdrawn from an inner space of the housing;
expand or reduce the content displayed in the display region having the first size, based on a touch input related to the content; and
insert or withdraw at least a part of the flexible display into or from the inner space of the housing so that a size of the display region is changed to a second size different from the first size, in case that a touch input related to the content satisfies a first reference.

2. The electronic device of claim 1, wherein the processor is configured to expand or reduce the content displayed in the display region having the first size at an expansion ratio or a reduction ratio corresponding to a movement distance of a touch input related to the content.

3. The electronic device of claim 2, wherein the processor is configured to:
display guide information related to a size change of the display region in at least a part of the display region having the first size, in case that a movement distance of a touch input related to the content satisfies a second reference; and
insert or withdraw at least a part of the flexible display into or from the inner space of the housing so that a size of the display region is changed from the first size to the second size, in case that a movement distance of a touch input related to the content satisfies the first reference corresponding to the guide information.

4. The electronic device of claim 3, wherein the processor is configured to display guide information related to a size change of the display region in at least a part of the display region having the first size set based on at least one of a movement direction of a touch input related to the content or a direction in which a size of the display region can be changed.

5. The electronic device of claim 1, wherein the processor is configured to:
identify a reference position of the content displayed in the display region having the first size, based on a touch input related to the content; and
change a display position of the content so that the reference position of the content corresponds to the center of the display region having the second size, in case that a size of the display region is changed from the first size to the second size.

6. The electronic device of claim 1, wherein the processor is configured to:
identify an expansion ratio or a reduction ratio of the content corresponding to a movement distance of a touch input related to the content; and
determine that a touch input related to the content satisfies the first reference, in case that the expansion ratio or the reduction ratio of the content exceeds a reference ratio.

7. The electronic device of claim 1, wherein the processor is configured to determine that a touch input related to the content satisfies the first reference, in case that a movement distance of a touch input related to the content exceeds a reference distance.

8. The electronic device of claim 1, wherein the processor is configured to:
determine whether a size of the display region can be changed, in case that a touch input related to the content satisfies the first reference; and
insert or withdraw at least a part of the flexible display into or from the inner space of the housing so that a size of the display region is changed to the second size different from the first size, in case that it is determined that a size of the display region can be changed.

9. The electronic device of claim 8, wherein the processor is configured to expand or reduce the content displayed in the display region having the first size, based on a touch input related to the content, in case that it is determined that a size change of the display region is limited.

10. A method for operating electronic device, the method comprising:
displaying content in a display region of a flexible display, which has a first size set by at least a part of the flexible display, which is inserted into or withdrawn from an inner space of a housing of the electronic device;
expanding or reducing the content displayed in the display region having the first size, based on a touch input related to the content; and
inserting or withdrawing at least a part of the flexible display into or from the inner space of the housing so that a size of the display region is changed to a second size different from the first size, in case that a touch input related to the content satisfies a first reference.

11. The method of claim 10, further comprising displaying guide information related to a size change of the display region in at least a part of the display region having the first size, in case that a movement distance of a touch input related to the content satisfies a second reference, and
wherein the inserting or withdrawing of the at least a part of the flexible display into or from the inner space of the housing comprises inserting or withdrawing at least a part of the flexible display into or from the inner space of the housing so that a size of the display region is changed from the first size to the second size, in case that a movement distance of a touch input related to the content satisfies the first reference corresponding to the guide information.

12. The method of claim 11, wherein the displaying of the guide information comprises displaying guide information related to a size change of the display region in at least a part of the display region having the first size set based on at least one of a movement direction of a touch input related to the content or a direction in which a size of the display region can be changed.

13. The method of claim 10, further comprising:
identifying a reference position of the content displayed in the display region having the first size, based on a touch input related to the content; and
changing a display position of the content so that the reference position of the content corresponds to the center of the display region having the second size, in case that a size of the display region is changed from the first size to the second size.

14. The method of claim 10, wherein the inserting or withdrawing of the at least a part of the flexible display into or from the inner space of the housing comprises:
identifying an expansion ratio or a reduction ratio of the content, based on a movement distance of a touch input related to the content; and
inserting or withdrawing at least a part of the flexible display into or from the inner space of the housing so that a size of the display region is changed to the second size different from the first size, in case that the expansion ratio or the reduction ratio of the content exceeds a reference ratio.

15. The method of claim 10, wherein the inserting or withdrawing of the at least a part of the flexible display into or from the inner space of the housing comprises inserting or withdrawing at least a part of the flexible display into or from the inner space of the housing so that a size of the display region is changed to the second size different from the first size, in case that a movement distance of a touch input related to the content exceeds a reference distance.
